(19) **Europäisches Patentamt / European Patent Office / Office européen des brevets**

(11) **EP 4 249 340 A1**

(12) # EUROPEAN PATENT APPLICATION
published in accordance with Art. 153(4) EPC

(43) Date of publication:
**27.09.2023 Bulletin 2023/39**

(21) Application number: **21908929.9**

(22) Date of filing: **12.11.2021**

(51) International Patent Classification (IPC):
**B60W 40/13** (2012.01)  **B60W 40/076** (2012.01)
**B60W 40/107** (2012.01)  **B60W 50/00** (2006.01)

(52) Cooperative Patent Classification (CPC):
**B60W 40/076; B60W 40/107; B60W 40/13; B60W 50/00**

(86) International application number:
**PCT/CN2021/130425**

(87) International publication number:
**WO 2022/134929 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020  CN 202011553155**

(71) Applicant: **Huawei Technologies Co., Ltd.
Shenzhen, Guangdong 518129 (CN)**

(72) Inventors:
• **WANG, Kai**
  **Shenzhen, Guangdong 518129 (CN)**
• **ZHOU, Yongyou**
  **Shenzhen, Guangdong 518129 (CN)**
• **WU, Zixian**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD AND APPARATUS FOR DETERMINING MASS OF VEHICLE, AND DEVICE AND MEDIUM**

(57)  A method and an apparatus (1300) for determining mass of a vehicle, a device, and a medium are disclosed. The method specifically includes: obtaining a parameter set of a vehicle at a first moment, where the parameter set includes a steering angle of each wheel of the vehicle, a lateral velocity, a yawing angular velocity, and a longitudinal force and a lateral force of each wheel, and the parameter set is used to determine turning resistance of the vehicle; and determining mass of the vehicle based on the parameter set and a longitudinal dynamics model, where the longitudinal dynamics model describes a longitudinal force balance of the vehicle, and a longitudinal force applied to the vehicle includes the turning resistance.

Obtain a parameter set of a vehicle at a first moment, where the parameter set includes a steering angle of each wheel of the vehicle, a lateral velocity, a yawing angular velocity, and a longitudinal force and a lateral force of each wheel, and the parameter set is used to determine turning resistance of the vehicle — S401

Determine mass of the vehicle based on a longitudinal dynamics model, where the longitudinal dynamics model describes a longitudinal force balance of the vehicle, and a longitudinal force applied to the vehicle includes the turning resistance — S402

FIG. 4

EP 4 249 340 A1

**Description**

**CROSS-REFERENCE TO RELATED APPLICATIONS**

This application claims priority to Chinese Patent Application No. 202011553155.X, filed with the China National Intellectual Property Administration on December 24, 2020 and entitled "METHOD AND APPARATUS FOR DETERMINING MASS OF VEHICLE, DEVICE, AND MEDIUM", which is incorporated herein by reference in its entirety.

**TECHNICAL FIELD**

This application relates to the field of vehicle control technologies, and in particular, to a method and an apparatus for determining mass of a vehicle, a device, and a medium.

**BACKGROUND**

With continuous development of digital science and technologies and communication technologies, intelligent driving gradually comes into people's sight, and the intelligent driving also ushers in unprecedented development opportunities. Key technologies in the intelligent driving include perceptual positioning, planning and decision-making, actuation control, and other technologies. Usually, a location of a vehicle may be determined by using the perceptual positioning technology, a control policy for controlling the vehicle may be determined by using the planning and decision-making technology, and the vehicle may be controlled based on the control policy by using the actuation control technology.

The determining the control policy for controlling the vehicle and the controlling the vehicle based on the control policy heavily rely on factors of the vehicle and environmental factors, such as total mass of the vehicle and a road surface slope. If the total mass of the vehicle cannot be accurately determined, stability, mobility, and smoothness of the vehicle are affected.

**SUMMARY**

Embodiments of this application provide a method and an apparatus for determining mass of a vehicle, a device, and a medium, to improve accuracy of mass of a vehicle in a turning condition.

According to a first aspect, an embodiment of this application provides a method for determining mass of a vehicle. The method may be applied to an electronic device. The method specifically includes: obtaining a parameter set of a vehicle at a first moment, where the parameter set includes a steering angle of each wheel of the vehicle, a lateral velocity, a yawing angular velocity, and a longitudinal force and a lateral force of each wheel, and the parameter set is used to determine turning resistance of the vehicle; and determining mass of the vehicle based on the parameter set and a longitudinal dynamics model, where the longitudinal dynamics model describes a longitudinal force balance of the vehicle, and a longitudinal force applied to the vehicle includes the turning resistance. In this embodiment of this application, the turning resistance is introduced into the longitudinal dynamics model, to extend an application scenario of determining mass of the vehicle. In this way, mass of the vehicle can also be determined when the vehicle is in a turning condition. In addition, in this embodiment of this application, the parameter set of the vehicle at the first moment is obtained, so that a value of turning resistance applied to the vehicle at the first moment can also be determined. However, a value of the turning resistance does not need to be calculated when the mass of the vehicle is determined by using the longitudinal dynamics model. During operation of the vehicle, impact of the turning resistance on the longitudinal force applied to the vehicle is considered, so that accuracy of the mass determined when the vehicle is in the turning condition is improved.

In a possible design, if the vehicle includes two steering wheels, the turning resistance and the parameter set meet the following formula:

$$F_r = \sum_{i=1}^{n} F_{xi}(1 - \cos\beta_i) + \sum_{i=1}^{n} F_{yi}\sin\beta_i - mvw_r$$

$F_r$ is the turning resistance of the vehicle, m is the mass of the vehicle, $\beta_i$ is a steering angle of an $i$th steering wheel of the vehicle, n is a quantity of steering wheels of the vehicle, $F_{xi}$ is a longitudinal force of the $i$th steering wheel of the vehicle, $F_{yi}$ is a lateral force of the $i$th steering wheel of the vehicle, $v$ is a lateral velocity of the vehicle, and $w_r$ is a yawing angular velocity of the vehicle. In this embodiment of this application, when the vehicle includes two steering wheels, the electronic device can determine a relationship between the mass of the vehicle at the first moment and the turning resistance applied to the vehicle at the first moment by using the parameter set at the first moment and a formula, provided in this embodiment of this application, of a relationship between turning resistance and a parameter set. The relationship between the turning resistance applied to the vehicle and the mass of the vehicle is accurately determined. This helps improve accuracy of determining the mass of the vehicle by using the longitudinal dynamics model.

In a possible design, if the vehicle includes four steering wheels, the turning resistance and the parameter set meet the following formula:

$$F_r = \sum_{i=1}^{n} F_{xi}(1 - \cos\beta_i) + \sum_{i=1}^{2} F_{yi}\sin\delta_i - \sum_{i=3}^{4} F_{yi}\sin\beta_i - mvw_r$$

$F_r$ is the turning resistance of the vehicle, $m$ is the mass of the vehicle, $\beta_i$ is a steering angle of an $i^{th}$ steering wheel of the vehicle, $n$ is a quantity of steering wheels of the vehicle, $F_{xi}$ is a longitudinal force of the $i^{th}$ steering wheel of the vehicle, $F_{yi}$ is a lateral force of the $i^{th}$ steering wheel of the vehicle, $v$ is a lateral velocity of the vehicle, and $w_r$ is a yawing angular velocity of the vehicle, where an included angle between a direction of the longitudinal velocity and a direction of each of $F_{y1}$ and $F_{y2}$ is greater than 90°, and an included angle between the direction of the longitudinal velocity and a direction of each of $F_{y3}$ and $F_{y4}$ is less than 90°. In this embodiment of this application, when the vehicle includes four steering wheels, the electronic device can determine a relationship between the mass of the vehicle at the first moment and the turning resistance applied to the vehicle at the first moment by using the parameter set at the first moment and a formula, provided in this embodiment of this application, of a relationship between turning resistance and a parameter set. The relationship between the turning resistance applied to the vehicle and the mass of the vehicle is accurately determined. This helps improve accuracy of determining the mass of the vehicle by using the longitudinal dynamics model.

In a possible design, the longitudinal dynamics model is $F_d = F_j + F_w + F_f + F_i + F_r$, where $F_j$ is acceleration resistance, $F_w$ is air resistance, $F_f$ is rolling resistance, $F_i$ is slope resistance, $F_r$ is the turning resistance, and $F_d$ is a driving force.

In a possible design, the longitudinal dynamics model is $F_d = F_j + F_w + F_f + F_i + F_b + F_r$, where $F_j$ is acceleration resistance, $F_w$ is air resistance, $F_f$ is rolling resistance, $F_i$ is slope resistance, $F_b$ is a braking force, $F_r$ is the turning resistance, and $F_d$ is a driving force.

In a possible design, after obtaining the parameter set of the vehicle at the first moment, the electronic device may determine the relationship between the mass of the vehicle and the turning resistance based on the parameter set and a preset relationship between turning resistance and a parameter set, and then determine the mass of the vehicle based on the relationship and the longitudinal dynamics model. In this embodiment of this application, the preset relationship between turning resistance and a parameter set is also a relationship between turning resistance and mass. The relationship may also be understood as a relationship between turning resistance, physical quantities in the parameter set, and mass of the vehicle. The longitudinal dynamics model provided in this embodiment of this application describes the longitudinal force balance of the vehicle. The longitudinal force applied to the vehicle may include one or more of the driving force, the braking force, the air resistance, the friction resistance, and the acceleration resistance. The longitudinal force applied to the vehicle further includes the turning resistance applied to the vehicle. A longitudinal force other than the turning resistance may be a value or a product of a value and mass of the vehicle. For example, the slope resistance is $mg\sin\theta$, where $\theta$ is the road surface slope and may be measured or calculated. The electronic device may determine the mass of the vehicle by using a captured parameter set based on the longitudinal dynamics model and the relationship between turning resistance and mass of the vehicle.

In a possible design, the electronic device may further determine a first relationship between mass of the vehicle, a longitudinal force other than the turning resistance, and physical quantities in a parameter set by using the longitudinal dynamics model and the preset relationship between turning resistance and a parameter set. The first relationship may also be considered as a variation of the longitudinal dynamics model. The electronic device may determine mass of the vehicle at any moment by using a parameter set at the any moment and the first relationship. The first relationship does not need to be re-determined during determining the mass of the vehicle at the any moment.

In a possible design, the longitudinal dynamics model is m =
$$\frac{F_d - F_w - \sum_{i=1}^{n} F_{xi}(1 - \cos\beta_i) - \sum_{i=1}^{j} F_{yi}\sin\beta_i + \sum_{i=j+1}^{n} F_{yi}\sin\beta_i}{fg\cos\theta + g\sin\theta + \delta a - vw_r}$$
, where $F_d$ is a driving force of the vehicle, $F_w$ is air resistance of the vehicle, m is the mass of the vehicle, $\beta_i$ is a steering angle of an $i^{th}$ steering wheel of the vehicle, n is a quantity of steering wheels of the vehicle, $F_{xi}$ is a longitudinal force of the $i^{th}$ steering wheel of the vehicle, $F_{yi}$ is a lateral force of the $i^{th}$ steering wheel of the vehicle, v is a lateral velocity

of the vehicle, $w_r$ is a yawing angular velocity of the vehicle, f is a rolling resistance factor, $\delta$ is a rotating mass conversion factor, $\theta$ is a road surface slope, and a is an actual longitudinal acceleration of the vehicle.

In a possible design, the longitudinal dynamics model is m =

$$\frac{F_d - F_w - F_b - F_{x1}(1-\cos\beta_1) - F_{x2}(1-\cos\beta_2) - F_{y1}\sin\beta_1 - F_{y2}\sin\beta_2}{fg\cos\theta + g\sin\theta + \delta a - vw_r}$$, where $F_d$ is a driving force of the vehicle, $F_w$ is air resistance of the vehicle, m is the mass of the vehicle, $\beta_i$ is a steering angle of an i$^{th}$ steering wheel of the vehicle, n is a quantity of steering wheels of the vehicle, $F_{xi}$ is a longitudinal force of the i$^{th}$ steering wheel of the vehicle, $F_{yi}$ is a lateral force of the i$^{th}$ steering wheel of the vehicle, v is a lateral velocity of the vehicle, $w_r$ is a yawing angular velocity of the vehicle, f is a rolling resistance factor, $\delta$ is a rotating mass conversion factor, $\theta$ is a road surface slope, a is a longitudinal acceleration of the vehicle, and $F_b$ is a braking force.

In a possible design, after the determining mass of the vehicle based on a longitudinal dynamics model, the method further includes: determining mass of the vehicle at a second moment based on the mass, where the second moment is later than the first moment. In this embodiment of this application, after the mass of the vehicle is determined by using the longitudinal dynamics model, mass of the vehicle at any second moment later than the first moment is estimated by using the mass of the vehicle at the first moment. This can improve precision of determining mass.

In a possible design, the estimating mass of the vehicle at a second moment includes: obtaining a first parameter set and a second parameter set of the vehicle at the second moment, where the first parameter set includes a road surface slope, a longitudinal velocity, a lateral velocity, and a yawing angular velocity, and the second parameter set includes a steering angle of each wheel of the vehicle, a lateral velocity, a yawing angular velocity, a longitudinal force and a lateral force of each wheel, a driving force, and air resistance; determining a first input value, where the first input value is determined based on a preset rolling friction parameter, a preset rotating mass conversion factor, and the first parameter set; determining a second input value, where the second input value is determined based on the second parameter set; determining a first value based on the first input value, the second input value, and the mass of the vehicle at the first moment, where the first value is an estimated value of the mass of the vehicle at the second moment; and determining the mass of the vehicle at the second moment based on the first value, a first mass threshold, and a second mass threshold. In this embodiment of this application, the mass of the vehicle at the second moment is determined based on the first input value that is determined based on the first parameter set obtained at the second moment, the second input value that is determined based on the second parameter set obtained at the second moment, and the mass of the vehicle at the first moment. The mass of the vehicle at the second moment is determined in real time, that is, total mass of the vehicle is identified in real time, to adapt to complex and variable driving conditions.

In a possible design, during the determining the mass of the vehicle at the second moment based on the first value, if the first value is less than or equal to the first mass threshold, it is determined that the first mass threshold is the mass of the vehicle at the second moment; if the first value is greater than or equal to the second mass threshold, it is determined that the second mass threshold is the mass of the vehicle at the second moment; or if the first value is greater than the first mass threshold and the first value is less than the second mass threshold, it is determined that the first value is the mass of the vehicle at the second moment. In this embodiment of this application, after the first value is determined, the first value is compared with mass of the vehicle without load and mass of the vehicle with full load. The first mass threshold may be the mass of the vehicle without load, and the second mass threshold may be the mass of the vehicle with full load. The mass of the vehicle at the second moment that is determined by comparing the first value with the first mass threshold and the second mass threshold can match an actual operating status of the vehicle, and facilitates control on the vehicle.

In a possible design, the longitudinal force applied to the vehicle further includes slope resistance of the vehicle. The electronic device may further determine a slope of a road surface on which the vehicle is located at the first moment, where the slope is used to determine the slope resistance. During the operation of determining the first mass of the vehicle based on the parameter set and the longitudinal dynamics model, the electronic device may determine the mass of the vehicle based on the parameter set, the slope, and the longitudinal dynamics model. In this embodiment of this application, the total mass of the vehicle is decoupled from the road surface slope, so that identification of the road surface slope is not affected by the mass of the vehicle or the turning resistance.

In a possible design, the determining a slope of a road surface on which the vehicle is located at the first moment includes: obtaining a longitudinal acceleration signal and a longitudinal velocity signal of the vehicle at the first moment; denoising the longitudinal acceleration signal and the longitudinal velocity signal; determining a second value based on a denoised longitudinal acceleration signal, a denoised longitudinal velocity signal, and a slope determined last time, where the second value is an estimated value of the road surface slope at the first moment; and determining, based on the second value and a slope threshold, the slope of the road surface on which the vehicle is located at the first moment. In this embodiment of this application, impact of external interference and a sudden change of a sensor signal on the longitudinal acceleration signal and the longitudinal velocity signal is considered, and the longitudinal acceleration signal and the longitudinal velocity signal are denoised to improve precision of determining the road surface slope. This helps improve accuracy and precision of the mass of the vehicle.

In a possible design, during the determining, based on the second value, the slope of the road surface on which the vehicle is located at the first moment, if an absolute value of the second value is less than the slope threshold, it is determined that the second value is the slope of the road surface on which the vehicle is located at the first moment; if an absolute value of the second value is greater than or equal to the slope threshold and the second value is less than 0, it is determined that an opposite number of the slope threshold is the slope of the road surface on which the vehicle is located at the first moment; or if an absolute value of the second value is greater than or equal to the slope threshold and the second value is greater than 0, it is determined that the slope threshold is the slope of the road surface on which the vehicle is located at the first moment. In this embodiment of this application, after the second value is determined, the second value is compared with the slope threshold. The slope threshold may be a maximum road surface slope. The road surface slope determined by comparing the second value with the slope threshold can match an actual operating status of the vehicle, and helps improve accuracy of determining the mass of the vehicle.

According to a second aspect, an embodiment of this application further provides an apparatus for determining mass of a vehicle, and the apparatus has a function of implementing any one of the first aspect or the possible designs of the first aspect. The function may be implemented by hardware, or may be implemented by hardware executing corresponding software. The hardware or the software includes one or more modules corresponding to the function.

According to a third aspect, this application provides an electronic device, including a processor and a memory. The memory is configured to store computer-executable instructions. When the electronic device runs, the processor executes the computer-executable instructions stored in the memory, so that the electronic device performs the method in any one of the first aspect or the designs of the first aspect.

According to a fourth aspect, a computer storage medium is provided, and stores a computer program. The computer program includes instructions for performing the method in the foregoing aspects.

According to a fifth aspect, a computer program product including instructions is provided. When the computer program product runs on a computer, the computer is enabled to perform the method in the foregoing aspects.

According to a sixth aspect, a chip is provided. The chip includes a processor. When the processor executes instructions, the processor is configured to perform the method in any one of the first aspect or the designs of the first aspect. The instructions may come from an internal memory of the chip or an external memory of the chip. Optionally, the chip further includes an input/output circuit.

For technical effect of any design of the second aspect to the sixth aspect, refer to the technical effect of the corresponding method in the foregoing descriptions. Details are not described herein again.

## BRIEF DESCRIPTION OF DRAWINGS

FIG. 1 is a schematic diagram of longitudinal forces applied to a vehicle in the conventional technology;

FIG. 2 is a schematic diagram of a system architecture of a vehicle according to an embodiment of this application;

FIG. 3 is a schematic diagram of a system architecture of a vehicle according to an embodiment of this application;

FIG. 4 is a schematic diagram of a longitudinal dynamics model according to an embodiment of this application;

FIG. 5 is a schematic flowchart of a method for determining mass of a vehicle according to an embodiment of this application;

FIG. 6 is a schematic diagram of another longitudinal dynamics model according to an embodiment of this application;

FIG. 7 is a schematic diagram of still another longitudinal dynamics model according to an embodiment of this application;

FIG. 8 is a schematic diagram of still another longitudinal dynamics model according to an embodiment of this application;

FIG. 9 is a schematic diagram of still another longitudinal dynamics model according to an embodiment of this application;

FIG. 10 is a schematic diagram of still another longitudinal dynamics model according to an embodiment of this application;

FIG. 11 is a schematic flowchart of a method for determining mass of a vehicle according to an embodiment of this application;

FIG. 12 is a schematic flowchart of a method for determining a road surface slope according to an embodiment of this application;

FIG. 13 is a schematic diagram of a structure of an apparatus for determining mass of a vehicle according to an embodiment of this application; and

FIG. 14 is a schematic diagram of a structure of another apparatus for determining mass of a vehicle according to an embodiment of this application.

## DESCRIPTION OF EMBODIMENTS

To make objectives, technical solutions, and advantages of embodiments of this application clearer, the following clearly and completely describes technical solutions in embodiments of this application with reference to accompanying drawings in embodiments of this application.

With continuous development of digital science and technologies and communication technologies, intelligent driving gradually comes into people's sight, and the intelligent driving also ushers in unprecedented development opportunities. Key technologies in the intelligent driving include perceptual positioning, planning and decision-making, actuation control, and other technologies. Usually, a location of a vehicle may be determined by using the perceptual positioning technology, a control policy for controlling the vehicle may be determined by using the planning and decision-making technology, and the vehicle may be controlled based on the control policy by using the actuation control technology.

The determining the control policy for controlling the vehicle and the controlling the vehicle based on the control policy heavily rely on factors of the vehicle and environmental factors, such as total mass of the vehicle and a road surface slope. If the total mass of the vehicle cannot be accurately determined, stability, mobility, and smoothness of the vehicle are affected.

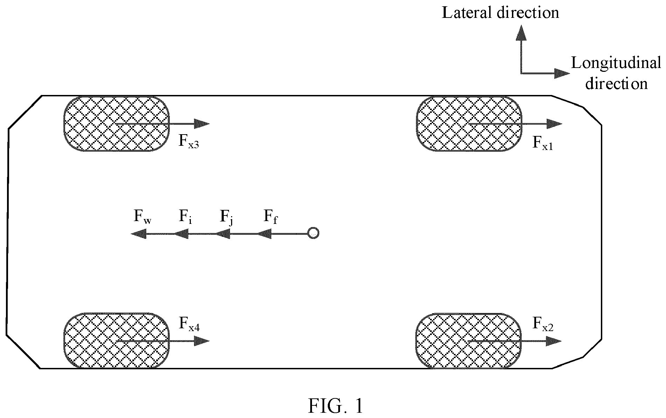

Currently, a dynamics model used in a common method for determining total mass of a vehicle includes a driving force, acceleration resistance, air resistance, rolling resistance, and slope resistance. FIG. 1 shows a longitudinal dynamics model for a vehicle that is used in a conventional method for determining total mass of a vehicle. In a longitudinal direction, forces applied to a vehicle include acceleration resistance $F_j$, air resistance $F_w$, rolling resistance $F_f$, slope resistance $F_i$, and a driving force $F_d$. The conventional longitudinal dynamics model for a vehicle is $F_d = F_j + F_w + F_f + F_i$.

The conventional longitudinal dynamics model for a vehicle is applicable only to a case in which a vehicle is in a straight-forward condition. However, when the vehicle is in a turning condition, the vehicle is affected by turning resistance, and a vehicle speed decreases. The longitudinal dynamics model in the straight-forward condition is still used when the vehicle is in the turning condition, and total mass of the vehicle cannot be accurately determined. Consequently, control on safety, stability, and mobility of the vehicle is greatly limited in an intelligent driving scenario.

Based on this, embodiments of this application provide a method and an apparatus for determining mass of a vehicle, to determine total mass of a vehicle by using a longitudinal dynamics model including turning resistance, so that mass of the vehicle in a turning condition can be determined. The method and the apparatus are based on a same concept. Because principles for resolving a problem by using the method and the apparatus are similar, mutual reference may be made between implementations of the apparatus and the method, and repeated descriptions are omitted.

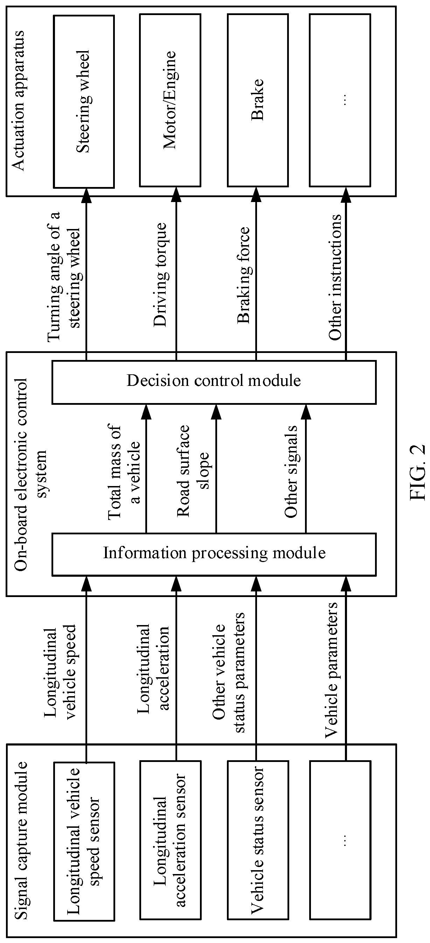

With reference to a diagram of a system architecture of a vehicle shown in FIG. 2, the vehicle may include a signal capture module, an on-board electronic control system, an actuation apparatus, and the like. The signal capture module may include a longitudinal velocity sensor, a longitudinal acceleration sensor, a yawing angular velocity sensor, and another vehicle status sensor. The signal capture module can capture vehicle status parameters such as a longitudinal velocity, a longitudinal acceleration, and a yawing angular velocity in real time, and send captured data or signals to an information processing module in the on-board electronic control system.

The actuation apparatus includes actuators such as a steering wheel, a motor or an engine, and a brake. The actuation apparatus may control a corresponding actuator according to a control instruction of a decision control module.

The on-board electronic control system may include the information processing module and the decision control module. The information processing module may perform the method for determining total mass of a vehicle in embodiments of this application, to determine data such as total mass of a vehicle. The decision control module performs decision planning and corresponding dynamics control on the vehicle based on the total mass of the vehicle that is determined by the information processing module.

The decision control module in the on-board electronic control system sends an actuation parameter, such as a rotation angle of a steering wheel, a driving torque, a braking force, or another instruction, to the actuation apparatus.

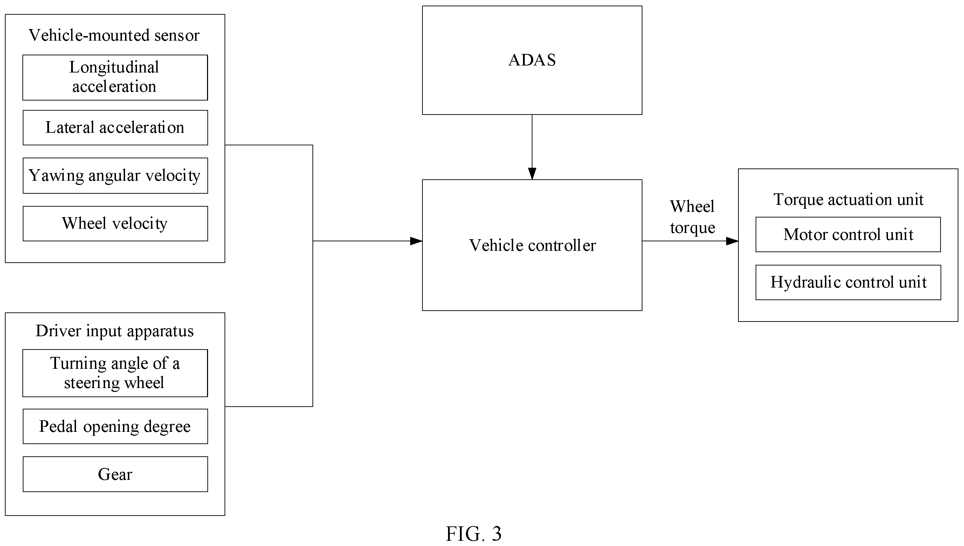

The method for determining mass of a vehicle in embodiments of this application is applied to an electronic device. The electronic device may be used in a vehicle. As shown in FIG. 3, a system of the vehicle may include but is not limited to a vehicle-mounted sensor, a driver input apparatus (such as a steering wheel, a pedal, a manual gear joystick, or an automatic gear controller), an advanced driver assistance system (advanced driver assistance system, ADAS), a vehicle controller, a torque actuation unit, and the like. The vehicle-mounted sensor is configured to capture vehicle status information such as a longitudinal acceleration and a yawing angular velocity. The advanced driver assistance system may detect a steering requirement of the vehicle and the like. The vehicle controller may control vehicle driving, stability, and the like. Further, the vehicle controller may perform the method for determining mass of a vehicle in embodiments of this application. The vehicle controller obtains various data from the vehicle-mounted sensor, the driver input apparatus, and the ADAS, and determines mass of the vehicle based on a dynamics model including turning resistance. The vehicle controller may further automatically switch maneuverability and stability control objectives and calculate a control quantity based on the determined mass of the vehicle, and convert the control quantity into a driving or braking torque requirement of a wheel. The torque actuation unit may be configured to receive the torque requirement of the wheel from the vehicle controller, and apply a braking or driving torque to the wheel, to control maneuverability and stability of the vehicle. Optionally, the torque actuation unit may include a motor control unit, a hydraulic control unit, and the like.

It should be noted that the system architecture shown in FIG. 3 does not constitute a limitation on a front axis and rear axis distributed driven vehicle to which embodiments of this application are applicable, and the front axis and rear axis distributed driven vehicle may include more or fewer components. For example, when the front axis and rear axis distributed driven vehicle does not have an automatic driving function, the front axis and rear axis distributed driven vehicle does not include an ADAS. For another example, when the front axis and rear axis distributed driven vehicle has only an automatic driving function but no manual driving function, the front axis and rear axis distributed driven vehicle does not include a driver input apparatus. For still another example, when the front axis and rear axis distributed driven vehicle has both an automatic driving function and a manual driving function, the front axis and rear axis distributed driven vehicle includes an ADAS and a driver input apparatus.

In addition, it should be further noted that, in embodiments of this application, a parameter that can change in real time may be denoted as a function with time t as a variable, and t may indicate a current moment. Certainly, a parameter calculated or estimated based on the function with t as a variable may also be denoted as a function with $t$ as a variable.

For example, in the system architecture shown in FIG. 3, a longitudinal acceleration, a yawing angular velocity, a steering angle of each wheel, and a longitudinal force and a lateral force of each wheel that may be measured by the vehicle-mounted sensor may be denoted as $a(t)$, $w_r(t)$, $\beta_i(t)$, $F_{xi}(t)$, and $F_{yi}(t)$ (i = 1, 2, 3, 4, ...) respectively.

Optionally, the steering angle of each wheel may be estimated. For example, the vehicle-mounted sensor may measure a rotation angle of the steering wheel. The steering angle of each wheel is determined based on a calibrated relationship between the rotation angle of the steering wheel and the steering angle of each wheel.

Optionally, the yawing angular velocity may be estimated. For example, the vehicle-mounted sensor may measure a wheel velocity of each wheel, the steering angle of each wheel, a lateral acceleration of the vehicle, and a longitudinal acceleration of the vehicle, and determine the yawing angular velocity through estimation. Alternatively, the estimated yawing angular velocity may be modified, and a modified yawing angular velocity is determined as a yawing angular velocity of the vehicle.

Optionally, the longitudinal force and the lateral force of each wheel may be estimated. For example, estimation is performed by using parameters such as the wheel velocity of each wheel, a side slip angle of each wheel, and a vertical load signal of each wheel.

Optionally, the vehicle-mounted sensor may include a torque sensor, configured to measure a driving torque provided by the engine or the motor.

Optionally, the vehicle-mounted sensor may include a cylinder pressure sensor, configured to measure pressure of a wheel cylinder. This helps determine a braking force. The vehicle-mounted sensor may also include an angle sensor, configured to measure an opening/closing angle of the pedal. This helps determine a braking force based on a pre-calibrated mapping (correspondence) between an angle and a braking force.

Calculation methods for the foregoing parameters are known in the conventional technology and are complex, and therefore are not described in detail in embodiments of this application.

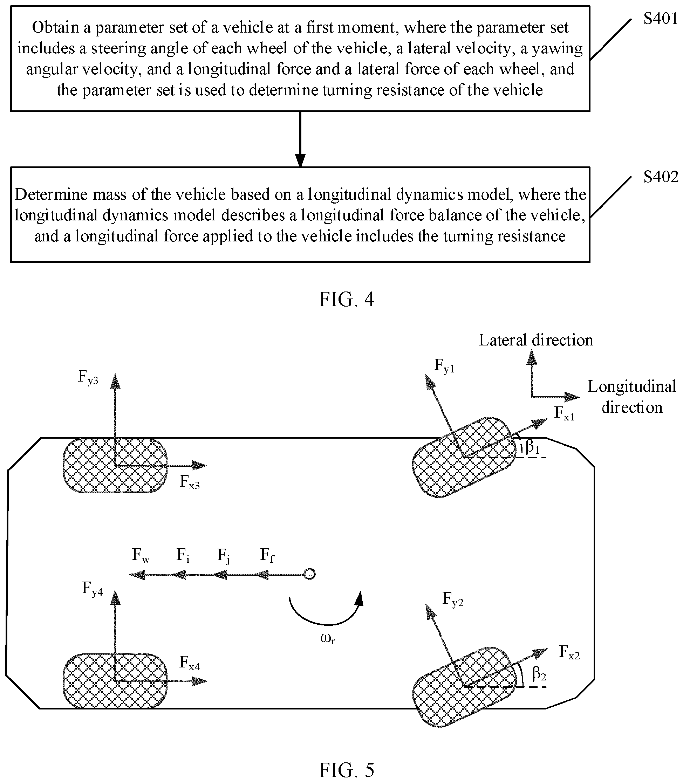

FIG. 4 shows a method for determining mass of a vehicle. The method is applicable to a vehicle shown in FIG. 5 to FIG. 8. The method is performed by a device for determining mass of a vehicle. The device for determining mass of a vehicle may be a vehicle controller, or may be a separate electronic device independent of a vehicle controller, or may be any vehicle-mounted device to which a function of determining mass of a vehicle is coupled. In the following embodiment, the device for determining mass of a vehicle may be referred to as an electronic device for short. In addition, in this embodiment of this application, the vehicle may be a two-wheel steering vehicle, a four-wheel steering vehicle, or a vehicle with more than four steering wheels. This is not limited in this application. The method includes at least the following steps.

Step S401: Obtain a parameter set of a vehicle at a first moment, where the parameter set includes a steering angle of each wheel of the vehicle, a lateral velocity, a yawing angular velocity, and a longitudinal force and a lateral force of each wheel, and the parameter set is used to determine turning resistance.

During specific implementation, a vehicle-mounted sensor module may measure parameters such as the steering angle of each wheel of the vehicle, the lateral velocity, the yawing angular velocity, and the longitudinal force and the lateral force of each wheel at the first moment (for example, a moment t), and send the measured parameters to a vehicle controller. The vehicle controller obtains the parameter set at the first moment, where the parameter set may be used to determine the turning resistance, so that the vehicle controller determines mass of the vehicle in a turning condition based on the parameter set at the first moment.

Step S402: Determine mass of the vehicle based on the parameter set and a longitudinal dynamics model, where the longitudinal dynamics model describes a longitudinal force balance of the vehicle, and a longitudinal force applied to the vehicle includes the turning resistance.

In this embodiment of this application, the electronic device determines the mass of the vehicle by using the longitudinal dynamics model including the turning resistance, so that accuracy of the mass of the vehicle in the turning condition can be improved. When the vehicle is in a straight-forward condition, the turning resistance in the longitudinal dynamics model including the turning resistance is 0, and mass of the vehicle may also be determined by using the longitudinal dynamics model. Therefore, the longitudinal dynamics model provided in this application is applicable to both the turning condition and the straight-forward condition.

In an example, the vehicle may be a front-wheel steering vehicle. For example, the vehicle includes four wheels, and during steering of the vehicle, two front wheels deflect to form steering angles with a longitudinal direction of the vehicle. FIG. 5 shows forces applied to a vehicle in a turning condition. The vehicle is subject to acceleration resistance $F_j$, air resistance $F_w$, rolling resistance $F_f$, slope resistance $F_i$, a driving force $F_d$, and turning resistance $F_r$.

A longitudinal dynamics model provided in an embodiment of this application is $F_d = F_j + F_w + F_f + F_i + F_r$. The turning resistance $F_r$ may be determined based on a steering angle of each wheel, a lateral velocity, a yawing angular velocity, and a longitudinal force and a lateral force of each wheel. For example, the turning resistance is determined by using the following formula:

$$F_r = F_{x1}(1 - cos\beta_1) + F_{x2}(1 - cos\beta_2) + F_{y1}sin\beta_1 + F_{y2}sin\beta_2 - mvw_r,$$

where
$F_{xi}$ is a longitudinal force applied to an i$^{th}$ (i = 1, 2, 3, 4) wheel, $F_{yi}$ is a lateral force applied to the i$^{th}$ wheel, $\beta_1$ is a steering angle of a 1$^{st}$ wheel, $\beta_2$ is a steering angle of a 2$^{nd}$ wheel, $v$ is the lateral velocity of the vehicle, $w_r$ is the yawing angular velocity, and m is total mass of the vehicle.

The driving force $F_d$ is a sum of longitudinal forces $F_{xi}$ applied to all wheels of the vehicle. A value of the driving force $F_d$ may be determined based on a driving torque provided by an engine or a motor, for example $F_d = \frac{T_{aq}i_t\eta}{r}$, where $T_{aq}$ is the driving torque provided by the engine or the motor, $i_t$ is a ratio of transmission from the engine or the motor to a wheel, $\eta$ is mechanical efficiency of a transmission system, and r is a wheel radius.

A value of the acceleration resistance $F_j$ may be calculated by using the following formula: $F_j = \delta ma$, where $\delta$ is a rotating mass conversion factor, m is total mass of the vehicle, and a is a real value of a longitudinal acceleration of the vehicle. In addition, $a = \frac{du(t)}{dt}$, where u(t) is a longitudinal velocity of the vehicle.

A value of the air resistance $F_w$ may be calculated by using the following formula: $F_w = \frac{C_D A u^2}{21.15}$, where $C_D$ is an air resistance factor, $A$ is a windward area of the vehicle, and $u$ is a longitudinal velocity of the vehicle.

A value of the rolling resistance $F_f$ may be calculated by using the following formula: $F_f = fmgcos\theta$, where $f$ is a rolling resistance factor, m is total mass of the vehicle, g is a gravity acceleration, and θ is a road surface slope.

A value of the slope resistance $F_i$ may be calculated by using the following formula: $F_i = mgsin\theta$, where m is total mass of the vehicle, g is a gravity acceleration, and θ is a road surface slope.

A variation of the longitudinal dynamics model provided in this embodiment of this application may be denoted as $F_d = \delta ma + F_w + fmgcos\theta + mgsin\theta + F_{x1}(1 - cos\beta_1) + F_{x2}(1 - cos\beta_2) + F_{y1}sin\beta_1 + F_{y2}sin\beta_2 - mvw_r$. The electronic device may not calculate and solve the values of the acceleration resistance, the rolling resistance, the slope resistance, and the turning resistance that are related to the mass. The electronic device may determine the mass of the vehicle by using the longitudinal dynamics model based on a mass-related force and a non-mass-related force among longitudinal forces applied to the vehicle. For example, m = $\frac{F_d - F_w - F_{x1}(1-cos\beta_1) - F_{x2}(1-cos\beta_2) - F_{y1}sin\beta_1 - F_{y2}sin\beta_2}{fgcos\theta + gsin\theta + \delta a - vw_r}$

The electronic device may pre-determine a driving force $F_d(t)$ and air resistance $F_w(t)$ at the first moment (for example, the moment t) by using the foregoing method for determining a driving force and air resistance. The electronic device may also preconfigure a rolling friction parameter f and preconfigure a rotating mass conversion factor δ.

When determining the mass of the vehicle based on the longitudinal dynamics model, the electronic device may determine mass m(t) of the vehicle at the first moment based on a relationship that is between mass and a longitudinal force applied to the vehicle and that is shown in the longitudinal dynamics model provided in the foregoing embodiment of this application or a variation of the longitudinal dynamics model, for example, m =

$$\frac{F_d - F_w - F_{x1}(1 - \cos\beta_1) - F_{x2}(1 - \cos\beta_2) - F_{y1}\sin\beta_1 - F_{y2}\sin\beta_2}{fg\cos\theta + g\sin\theta + \delta a - vw_r}$$

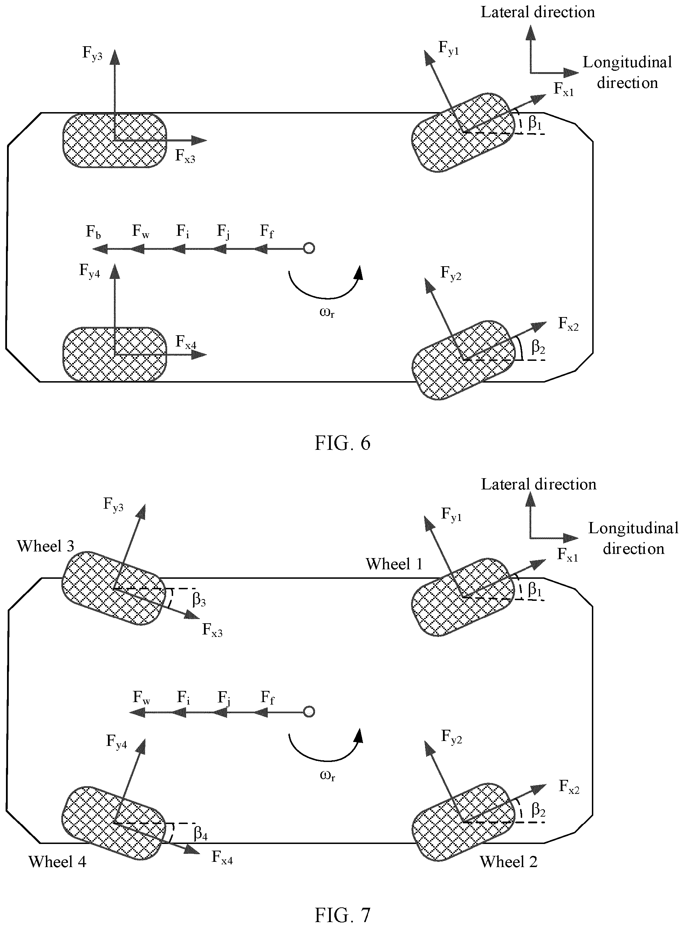

In a possible implementation, a driver usually performs a braking operation while performing a turning operation. Alternatively, in an intelligent driving scenario, the vehicle controller performs braking control on the vehicle to ensure stability of the vehicle. Therefore, the vehicle is also subject to a braking force in a turning condition (as shown in FIG. 6). An embodiment of this application provides another longitudinal dynamics model, which may be expressed as $F_d = F_j + F_w + F_f + F_i + F_r + F_b$, where $F_b$ is a braking force. A variation of the longitudinal dynamics model may be denoted

as $\dfrac{F_d - F_w - F_b - F_{x1}(1 - \cos\beta_1) - F_{x2}(1 - \cos\beta_2) - F_{y1}\sin\beta_1 - F_{y2}\sin\beta_2}{fg\cos\theta + g\sin\theta + \delta a - vw_r}$ .

The electronic device may pre-obtain a braking force $F_b$ at the first moment (for example, the moment t) by using the foregoing method for determining a braking force. The electronic device may determine the mass of the vehicle at the first moment based on the parameter set obtained at the first moment and the longitudinal dynamics model.

For ease of understanding of the longitudinal dynamics model that includes the turning resistance and that is provided in this embodiment of this application, the following briefly describes a process of determining the longitudinal dynamics model including the turning resistance. In a turning condition, the vehicle is in a yawing state, and a steering wheel and a longitudinal direction of the vehicle form a steering angle. Therefore, a longitudinal force and a lateral force of the wheel change a longitudinal force applied to the vehicle.

FIG. 6 shows forces applied to the vehicle in a turning condition. First, longitudinal dynamics balance equation may be established: $F_j + F_w + F_f + F_i + F_b + F_{y1}\sin\beta_1 + F_{y2}\sin\beta_2 - mvw_r = F_{x1}\cos\beta_1 + F_{x2}\cos\beta_2 + F_{x3} + F_{x4}$. Then the longitudinal dynamics balance equation may be combined with a relationship between a driving force of the vehicle and a longitudinal force applied to each wheel (the driving force $F_d$ is a sum of longitudinal forces $F_{xi}$ applied to all wheels), to obtain a relationship between a driving force, air resistance, slope resistance, rolling resistance, acceleration resistance, and a braking force: $F_d = F_j + F_w + F_f + F_b + F_i + F_{x1}(1 - \cos\beta_1) + F_{x2}(1 - \cos\beta_2) + F_{y1}\sin\beta_1 + F_{y2}\sin\beta_2 - mvw_r$, where $F_{x1}(1 - \cos\beta_1) + F_{x2}(1 - \cos\beta_2) + F_{y1}\sin\beta_1 + F_{y2}\sin\beta_2 - mvw_r$ is turning resistance $F_r$.

In an actual application scenario, if the turning resistance $F_r$ of the vehicle in the turning condition needs to be calculated, the turning resistance may be determined based on a driving force, a braking force, acceleration resistance, rolling resistance, and slope resistance of the vehicle during turning, for example, $F_r = F_d - F_j - F_w - F_f - F_b - F_i$. Alternatively, the turning resistance $F_r$ may be determined based on a longitudinal force, a lateral force, and a steering angle of a steering wheel, total mass of the vehicle, a lateral velocity, and a yawing angular velocity, for example, $F_r = F_{x1}(1 - \cos\beta_1) + F_{x2}(1 - \cos\beta_2) + F_{y1}\sin\beta_1 + F_{y2}\sin\beta_2 - mvw_r$.

In another example, the vehicle may be a four-wheel steering vehicle. For example, the vehicle includes four wheels, and during steering of the vehicle, all the four wheels deflect to form steering angles with a longitudinal direction of the vehicle. FIG. 7 shows forces applied to the vehicle in a turning condition. The vehicle is subject to acceleration resistance $F_j$, air resistance $F_w$, rolling resistance $F_f$, slope resistance $F_i$, a driving force $F_d$, and turning resistance $F_r$.

In the longitudinal dynamics model ($F_d = F_j + F_w + F_f + F_i + F_r$) provided in this embodiment of this application, the turning resistance $F_r$ may be expressed as $F_r = \sum_{i=1}^{n} F_{xi}(1 - \cos\delta_i) + \sum_{i=1}^{2} F_{yi}\sin\delta_i - \sum_{i=3}^{4} F_{yi}\sin\delta_i - mvw_r$ or $F_r = F_{x1}(1 - \cos\beta_1) + F_{x2}(1 - \cos\beta_2) + F_{x3}(1 - \cos\beta_3) + F_{x4}(1 - \cos\beta_4) + F_{y1}\sin\beta_1 + F_{y2}\sin\beta_2 - F_{y3}\sin\beta_3 - F_{y4}\sin\beta_4 - mvw_r$, where

$F_{yi}$ is a lateral force of an $i^{th}$ steering wheel, an included angle between a direction of a longitudinal velocity of the vehicle and a direction of each of $F_{y1}$ and $F_{y2}$ is greater than 90°, and an included angle between the direction of the longitudinal velocity of the vehicle and a direction of each of $F_{y3}$ and $F_{y4}$ is less than 90°.

In other words, when i indicates a wheel 1 or a wheel 2, a deflection direction of the wheel is the same as that of the vehicle; or when i indicates a wheel 3 or a wheel 4, a deflection direction of the wheel is opposite to that of the vehicle. For example, the deflection direction of the vehicle is counterclockwise deflection. In this case, when i indicates the wheel 1 or the wheel 2, the deflection direction of the wheel is also counterclockwise deflection; or when i indicates the wheel 3 or the wheel 4, the deflection direction of the wheel is clockwise deflection. For a four-wheel vehicle in practice, when i indicates the wheel 1 or the wheel 2, the wheel is a left front wheel or a right front wheel of the vehicle respectively; or when i indicates the wheel 3 or the wheel 4, the wheel is a left rear wheel or a right rear wheel of the vehicle respectively.

A variation of the longitudinal dynamics model provided in this embodiment of this application may be denoted as $F_d = \delta ma + F_w + fmg\cos\theta + mg\sin\theta + \sum_{i=1}^{n} F_{xi}(1 - \cos\delta_i) + \sum_{i=1}^{2} F_{yi}\sin\delta_i - \sum_{i=3}^{4} F_{yi}\sin\delta_i - mvw_r$ . The electronic device may not calculate and solve the values of the acceleration resistance, the rolling resistance, the slope resistance, and the turning resistance that are related to the mass. The electronic device may determine the mass of the vehicle by using the longitudinal dynamics model based on a mass-related force and a non-mass-related force among longitudinal forces applied to the vehicle. For example, $m = \frac{F_d - F_w - \sum_{i=1}^{n} F_{xi}(1-\cos\delta_i) - \sum_{i=1}^{2} F_{yi}\sin\delta_i + \sum_{i=3}^{4} F_{yi}\sin\delta_i}{fg\cos\theta + g\sin\theta + \delta a - vw_r}$ .

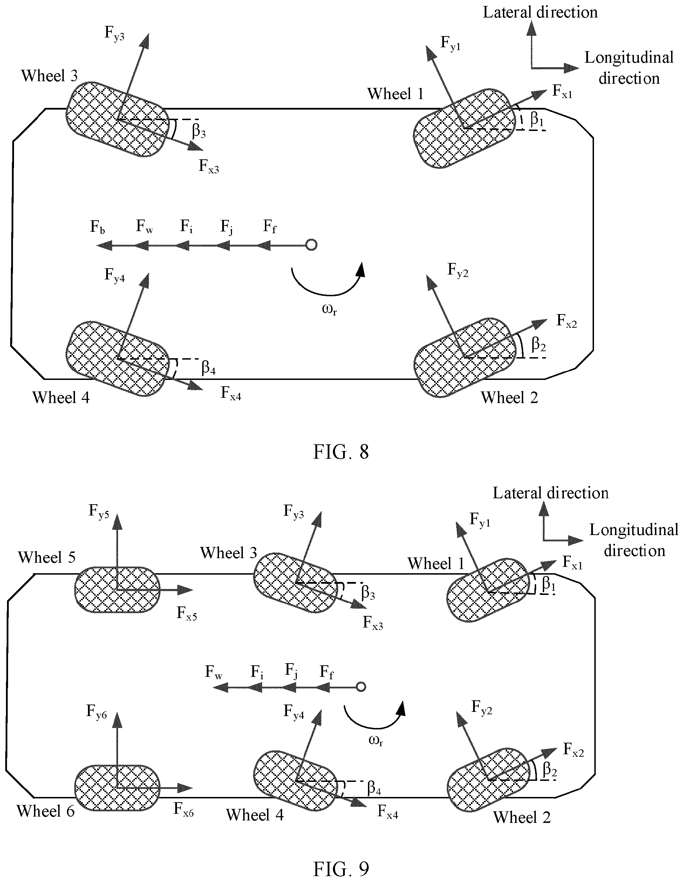

In a possible implementation, the vehicle is also subject to a braking force in a turning condition (as shown in FIG. 8). An embodiment of this application provides another longitudinal dynamics model, which may be expressed as $F_d = F_j + F_w + F_f + F_i + F_r + F_b$, where $F_b$ is a braking force. A variation of the longitudinal dynamics model may be denoted as $m = \frac{F_d - F_w - F_b - \sum_{i=1}^{n} F_{xi}(1-\cos\delta_i) - \sum_{i=1}^{2} F_{yi}\sin\delta_i + \sum_{i=3}^{4} F_{yi}\sin\delta_i}{fg\cos\theta + g\sin\theta + \delta a - vw_r}$ .

The electronic device may pre-obtain a braking force $F_b$ at the first moment (for example, the moment t) by using the foregoing method for determining a braking force. The electronic device may determine the mass of the vehicle at the first moment based on the parameter set obtained at the first moment and the longitudinal dynamics model.

The following briefly describes a process of determining a longitudinal dynamics model for a four-wheel steering vehicle. In a turning condition, the vehicle is in a yawing state, and a steering wheel and a longitudinal direction of the vehicle form a steering angle. Therefore, a longitudinal force and a lateral force of the wheel change a longitudinal force applied to the vehicle.

Based on forces applied to the vehicle in FIG. 8, a longitudinal dynamics balance equation may be $F_j + F_w + F_f + F_i + F_b + F_{y1}\sin\beta_1 + F_{y2}\sin\beta_2 - mvw_r = F_{x1}\cos\beta_1 + F_{x2}\cos\beta_2 + F_{x3}\cos\beta_3 + F_{x4}\cos\beta_4 + F_{y3}\sin\beta_3 + F_{y4}\sin\beta_4$.

The longitudinal dynamics balance equation may be combined with a relationship between a driving force of the vehicle and a longitudinal force applied to each wheel (the driving force $F_d$ is a sum of longitudinal forces $F_{xi}$ applied to all wheels), to obtain a relationship between a driving force, air resistance, slope resistance, rolling resistance, and acceleration resistance: $F_d = F_j + F_w + F_f + F_b + F_i + F_{x1}(1 - \cos\beta_1) + F_{x2}(1 - \cos\beta_2) + F_{x3}(1 - \cos\beta_3) + F_{x4}(1 - \cos\beta_4) + F_{y1}\sin\beta_1 + F_{y2}\sin\beta_2 - F_{y3}\sin\beta_3 - F_{y4}\sin\beta_4 - mvw_r$, where $F_{x1}(1 - \cos\beta_1) + F_{x2}(1 - \cos\beta_2) + F_{x3}(1 - \cos\beta_3) + F_{x4}(1 - \cos\beta_4) + F_{y1}\sin\beta_1 + F_{y2}\sin\beta_2 - F_{y3}\sin\beta_3 - F_{y4}\sin\beta_4 - mvw_r$ is turning resistance $F_r$.

In more vehicle operation scenarios, a vehicle, for example, a truck, may alternatively have more than four wheels. The longitudinal dynamics model $F_d = F_j + F_w + F_f + F_i + F_r$ provided in this embodiment of this application is also applicable to a vehicle having more than four wheels. $F_r = \sum_{i=1}^{n} F_{xi}(1 - \cos\beta_i) + \sum_{i=1}^{j} F_{yi}\sin\beta_i - \sum_{i=j+1}^{n} F_{yi}\sin\beta_i - mvw_r$ , where a 1st wheel to a jth wheel are wheels whose deflection directions are the same as that of the vehicle, and a (j + 1)th wheel to an nth wheel are wheels whose deflection directions are opposite to that of the vehicle. In other words, during turning of the vehicle, the 1st wheel to the jth wheel are wheels whose lateral forces form included angles of greater than 90° with a direction of a longitudinal velocity, and the (j + 1)th wheel to the nth wheel are wheels whose lateral forces form included angles of less than 90° with the direction of the longitudinal velocity.

The vehicle has more than four wheels, and some wheels are non-steering wheels. As shown in FIG. 9, a vehicle has six wheels, where a wheel 5 and a wheel 6 are non-steering wheels. A deflection angle of a non-steering wheel is 0° during turning of the vehicle. Because $\beta = 0°$ and a value of $\sin\beta$ is also 0, the non-steering wheel does not affect determining of turning resistance of the vehicle, and therefore does not affect determining of mass of the vehicle. In the longitudinal dynamics model, the non-steering wheel may be considered as a wheel whose deflection direction is the same as that of the vehicle, or may be considered as a wheel whose deflection direction is opposite to that of the vehicle.

In a scenario in which a vehicle includes more than four wheels and has four steering wheels, a variation of the longitudinal dynamics model ($F_d = F_j + F_w + F_f + F_i + F_r$) provided in this embodiment of this application is $m = \frac{F_d - F_w - \sum_{i=1}^{n} F_{xi}(1-\cos\beta_i) - \sum_{i=1}^{j} F_{yi}\sin\beta_i + \sum_{i=j+1}^{n} F_{yi}\sin\beta_i}{fg\cos\theta + g\sin\theta + \delta a - vw_r}$ , where n is a quantity of wheels of the vehicle, $F_{xi}$ is a longitudinal force of an ith wheel, and $F_{yi}$ is a lateral force of the ith wheel. A 1st wheel to a jth wheel are wheels whose lateral forces form included angles of greater than 90° with a direction of a longitudinal velocity, and a (j + 1)th wheel to an nth wheel are wheels whose lateral forces form included angles of less than 90° with the direction of the longitudinal velocity.

In a possible implementation, if the vehicle includes four steering wheels, when the electronic device determines the mass of the vehicle based on the longitudinal dynamics model in step S402, the electronic device may determine mass m(t) of the vehicle at the first moment based on a relationship that is between mass and a longitudinal force applied to the vehicle and that is shown in the longitudinal dynamics model provided in the foregoing embodiment of this application or a variation of the longitudinal dynamics model, for example, $\dfrac{F_d - F_w - \sum_{i=1}^{n} F_{xi}(1-\cos\beta_i) - \sum_{i=1}^{j} F_{yi}\sin\beta_i + \sum_{i=j+1}^{n} F_{yi}\sin\beta_i}{fg\cos\theta + g\sin\theta + \delta a - vw_r}$ .

Considering that the vehicle may be subject to a braking force in the longitudinal direction during turning process, a variation of the another longitudinal dynamics model ($F_d = F_j + F_w + F_f + F_i + F_r + F_b$) provided in this application is

$$m = \frac{F_d - F_w - F_b - \sum_{i=1}^{n} F_{xi}(1-\cos\beta_i) - \sum_{i=1}^{j} F_{yi}\sin\beta_i + \sum_{i=j+1}^{n} F_{yi}\sin\beta_i}{fg\cos\theta + g\sin\theta + \delta a - vw_r}$$

, where n is a quantity of wheels of the vehicle, $F_{xi}$ is a longitudinal force of an $i^{th}$ wheel, and $F_{yi}$ is a lateral force of the $i^{th}$ wheel. A $1^{st}$ wheel to a $j^{th}$ wheel (including a non-steering wheel) are wheels whose lateral forces form included angles of greater than 90° with a direction of a longitudinal velocity of the vehicle, and a $(j + 1)^{th}$ wheel to an $n^{th}$ wheel form included angles of less than 90° with the direction of the longitudinal velocity of the vehicle.

When the electronic device determines the mass of the vehicle based on the longitudinal dynamics model in step S402, the electronic device may determine mass m(t) of the vehicle at the first moment based on a relationship that is between mass and a longitudinal force applied to the vehicle and that is shown in the longitudinal dynamics model provided in the foregoing embodiment of this application or a variation of the longitudinal dynamics model, for example,

$$m = \frac{F_d - F_w - F_b - \sum_{i=1}^{n} F_{xi}(1-\cos\beta_i) - \sum_{i=1}^{j} F_{yi}\sin\beta_i + \sum_{i=j+1}^{n} F_{yi}\sin\beta_i}{fg\cos\theta + g\sin\theta + \delta a - vw_r}$$

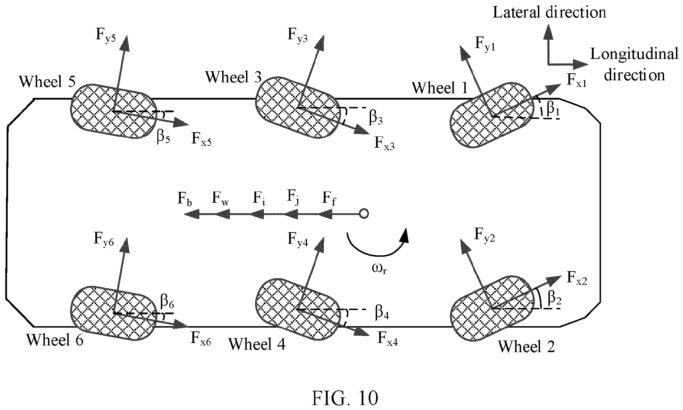

The method for determining mass of a vehicle in this application may be further applied to a vehicle having more than four steering wheels. As shown in FIG. 10, a vehicle has six wheels, and all the six wheels are steering wheels.

Turning resistance applied to the vehicle during turning is $F_r = \sum_{i=1}^{6} F_{xi}(1 - \cos\beta_i) + \sum_{i=1}^{2} F_{yi}\sin\beta_i - \sum_{i=3}^{6} F_{yi}\sin\beta_i - mvw_r$. FIG 10 shows a deflection status of each wheel. A wheel 1 and a wheel 2 are wheels whose deflection directions are the same as that of the vehicle. A wheel 3, a wheel 4, a wheel 5, and a wheel 6 are wheels whose deflection directions are opposite to that of the vehicle.

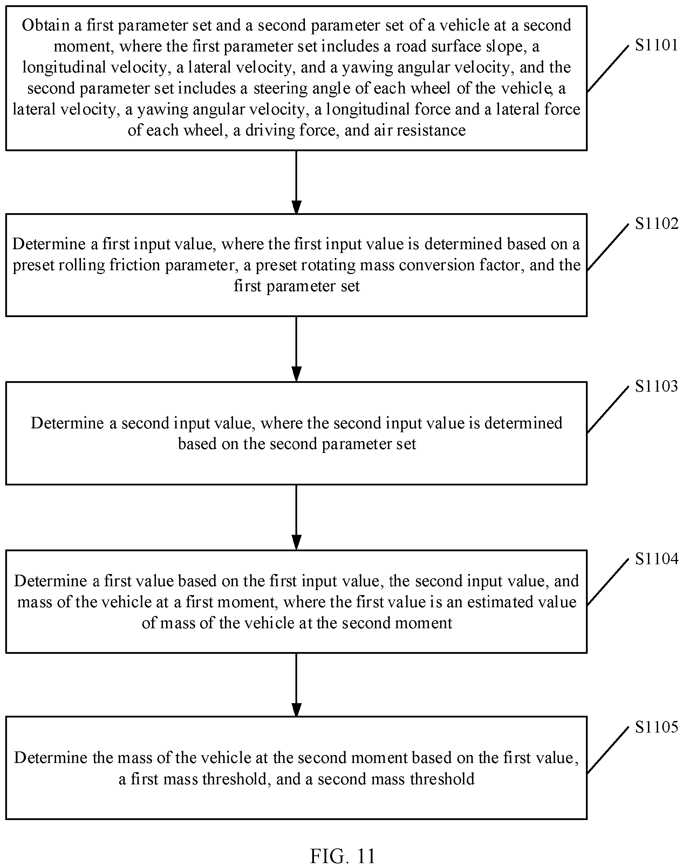

In another possible implementation, after determining the mass of the vehicle at the first moment, the electronic device may estimate mass of the vehicle at a second moment based on the mass of the vehicle at the first moment, where the second moment is later than the first moment. A method for determining mass of a vehicle in FIG. 11 includes the following steps.

Step S1101: Obtain a first parameter set and a second parameter set of the vehicle at the second moment, where the first parameter set includes a road surface slope, a longitudinal velocity, a lateral velocity, and a yawing angular velocity, and the second parameter set includes a steering angle of each wheel of the vehicle, a lateral velocity, a yawing angular velocity, a longitudinal force and a lateral force of each wheel, a driving force, and air resistance.

The vehicle-mounted sensor module may measure the longitudinal velocity, the lateral velocity, the yawing angular velocity, the steering angle of each wheel, and the longitudinal force and the lateral force of each wheel at the second moment (for example, a moment t + 1). The electronic device may obtain the foregoing parameters measured by the vehicle-mounted sensor module, and may further obtain parameters such as the driving force, the air resistance, and the road surface slope. The road surface slope, the longitudinal velocity, the lateral velocity, and the yawing angular velocity are parameters in the first parameter set. The steering angle of each wheel of the vehicle, the lateral velocity, the yawing angular velocity, the longitudinal force and the lateral force of each wheel, the driving force, and the air resistance are parameters in the second parameter set.

Step S1102: Determine a first input value, where the first input value is determined based on a preset rolling friction parameter, a preset rotating mass conversion factor, and the first parameter set.

The electronic device may determine the first input value $x_m(t + 1)$ by using the parameters in the first parameter set, the preset rolling friction parameter, and the preset rotating mass conversion factor. The electronic device may determine the first input value by using the following formula: $x_m = fg\cos\theta + g\sin\theta + \delta a - vw_r$, where a is a real value of a longitudinal acceleration of the vehicle, and the real value of the longitudinal acceleration may be determined based on the following formula: $a = \dfrac{du(t)}{dt}$, where u(t) is the longitudinal velocity of the vehicle.

Step S1103: Determine a second input value, where the second input value is determined based on the second parameter set.

The electronic device may determine the second input value $y_m(t + 1)$ by using the parameters in the first parameter set.

In an example, if the vehicle includes two steering wheels, the electronic device may determine the second input value by using the following formula: $y_m = F_d - F_w - F_{x1}(1 - \cos\beta_1) - F_{x2}(1 - \cos\beta_2) - F_{y1}\sin\beta_1 - F_{y2}\sin\beta_2$. During

determining of the mass of the vehicle at the first moment, if the longitudinal dynamics model that includes the turning resistance and that is used by the electronic device includes a braking force, the electronic device may determine the second input value by using the following formula: $y_m = F_d - F_w - F_b - F_{x1}(1 - \cos\beta_1) - F_{x2}(1 - \cos\beta_2) - F_{y1} \sin\beta_1 - F_{y2} \sin\beta_2$.

In another example, if the vehicle includes four steering wheels, the electronic device may determine the second input value by using the following formula: $y_m = F_d - F_w - \sum_{i=1}^{n} F_{xi}(1 - \cos\beta_i) - \sum_{i=1}^{j} F_{yi} \sin\beta_i + \sum_{i=j+1}^{n} F_{yi} \sin\beta_i$, where $F_{yi}$ is a lateral force of an $i^{th}$ steering wheel, an included angle between a direction of a longitudinal velocity of the vehicle and a direction of each of $F_{y1}$ and $F_{y2}$ is greater than 90°, and an included angle between the direction of the longitudinal velocity of the vehicle and a direction of each of $F_{y3}$ and $F_{y4}$ is less than 90°. During determining of the mass of the vehicle at the first moment, if the longitudinal dynamics model that includes the turning resistance and that is used by the electronic device includes a braking force, the electronic device may determine the second input value by using the following formula: $y_m = F_d - F_w - F_b - \sum_{i=1}^{n} F_{xi}(1 - \cos\beta_i) - \sum_{i=1}^{j} F_{yi} \sin\beta_i + \sum_{i=j+1}^{n} F_{yi} \sin\beta_i$.

Step S1104: Determine a first value based on the first input value, the second input value, and the mass of the vehicle at the first moment, where the first value is an estimated value of the mass of the vehicle at the second moment.

The electronic device may estimate the mass of the vehicle at the second moment by using a Kalman prediction method based on the first input value $x_m(t + 1)$, the second input value $y_m(t + 1)$, and the mass $m(t)$ of the vehicle at the first moment (for example, the moment $t$), to obtain the first value, which may be the mass of the vehicle at the moment $t + 1$.

Alternatively, the electronic device may predict the mass of the vehicle at the second moment by using a neural network model.

Alternatively, the electronic device may determine the mass of the vehicle at the second moment by using a least square identification model including a forgetting factor. Specifically, a least square identification model, provided in this application, that includes a forgetting factor and that is used for determining mass of a vehicle is specifically shown below:

$$\begin{cases} m(t + 1) = m(t) + K_m(t + 1)[y_m(t + 1) - x_m(t + 1)m(t)] \\ K_m(t + 1) = \dfrac{P_m(t)x_m(t + 1)}{\lambda_m + x_m(t + 1)P_m(t)x_m(t + 1)} \\ P_m(t + 1) = \dfrac{[1 - K_m(t + 1)x_m(t + 1)]P_m(t)}{\lambda_m} \end{cases}$$

$m$ is an identification quantity, $x_m$ is an observed quantity, $y_m$ is an output quantity, $K_m$ is a gain vector, $P_m$ is a covariance, and $\lambda_m$ is the forgetting factor. The forgetting factor $\lambda_\theta$ may be a value not less than 0.9 and not greater than 1. In practice, the electronic device may continuously perform self-iteration by using the least square identification model including the forgetting factor. The forgetting factor $\lambda_\theta$ may be a fixed value, or may be a value set by the electronic device based on other sampling data.

$x_m(t + 1)$ is the first input value, $y_m(t + 1)$ is the second input value, and $m(t)$ is the mass of the vehicle at the first moment. The first value may be determined by using the least square identification model including the forgetting factor, and is also the mass $m(t + 1)$ of the vehicle at the second moment that is estimated by the electronic device.

Step S1105: Determine the mass of the vehicle at the second moment based on the first value, a first mass threshold, and a second mass threshold.

To avoid an exception of determined mass of the vehicle due to an exception of a sensor or the like, the electronic device further compares the determined mass of the vehicle with a mass threshold. The mass threshold includes the first mass threshold $m_0$ and the second mass threshold $m_1$. The first mass threshold $m_0$ may be mass of the vehicle without load. The second mass threshold $m_1$ may be mass of the vehicle with full load.

If the first value is less than or equal to the first mass threshold $m_0$, it is determined that the first mass threshold $m_0$ is the mass of the vehicle at the second moment; or

if the first value is greater than or equal to the second mass threshold $m_1$, it is determined that the second mass threshold $m_1$ is the mass of the vehicle at the second moment; or
if the first value is greater than the first mass threshold $m_0$ and less than the second mass threshold $m_1$, it is determined that the first value is the mass of the vehicle at the second moment.

The electronic device may control the vehicle, for example, determine a control parameter, by using the mass of the vehicle at the second moment that is determined in step S1105.

The method for determining mass of a vehicle in the foregoing embodiment of this application is also applicable to a scenario in which the vehicle is in a straight-forward condition. When the vehicle is in the straight-forward condition, a steering angle of each wheel of the vehicle is 0°, and a value of turning resistance applied to the vehicle in the longitudinal direction is 0. It can be learned that any method for determining mass of a vehicle in the foregoing embodiments of this application is applicable to both a straight-forward condition and a turning condition. In addition, the mass of the vehicle is determined by using the least square identification model, so that impact of external interference and a sudden change of a sensor signal on accuracy of determining the mass of the vehicle can be avoided, and precision, accuracy, and robustness of determining the mass of the vehicle can be improved.

Before determining total mass of the vehicle by using the longitudinal dynamics model provided in this embodiment of this application, the electronic device further needs to pre-obtain a slope of a road surface on which the vehicle is located. Different from a conventional manner of jointly identifying total mass of a vehicle and a road surface slope, in the method for determining mass of a vehicle in this application, total mass of a vehicle is determined in a manner in which the total mass of the vehicle is decoupled from a road surface slope. In addition, this application further provides a method for determining a road surface slope. The following describes the method for determining a road surface slope in this application.

Example 1

First, the vehicle-mounted sensor may include a longitudinal acceleration sensor and a longitudinal velocity sensor that capture a longitudinal acceleration a(*t*) and a longitudinal velocity u(*t*) of the vehicle respectively. A longitudinal acceleration signal captured by the longitudinal acceleration sensor is a measured value of the longitudinal acceleration. Therefore, the measured value of the longitudinal acceleration is actually a signal obtained by coupling a real value of the longitudinal acceleration to a road surface slope.

Based on a dynamics model of the longitudinal acceleration sensor, $a(t) = \mathrm{gsin}\theta + \frac{du(t)}{dt}$, where g is a gravity acceleration, θ is the road surface slope, and $\frac{du(t)}{dt}$ is a derivative of the longitudinal velocity to time, and is also the real value of the longitudinal acceleration.

The electronic device may determine that the road surface slope is $\theta(t) = \arcsin(\frac{a(t) - \frac{du(t)}{dt}}{g})$ based on the measured value of the longitudinal acceleration and the longitudinal velocity that are captured and the dynamics model of the longitudinal acceleration sensor.

The electronic device determines mass of the vehicle by using the road surface slope determined θ in the foregoing method and the method for determining mass of a vehicle in the foregoing embodiment, so that the road surface slope and total mass of the vehicle can be identified in a decoupled manner.

Further, a slope value at the moment t + 1 is estimated by using the road surface slope value θ(t) at the moment t that is determined in the foregoing process. For example, the road surface slope at the moment t + 1 is estimated by using the Kalman algorithm, or the road surface slope at the moment t + 1 may be estimated by using the least square identification model, or the road surface slope at the moment t + 1 may be predicted by using the neural network model.

Example 2

This application further provides a method for determining a road surface slope, to resist impact of external interference or a sudden change of a sensor signal on precision of the road surface slope, and improve precision and accuracy of the road surface slope.

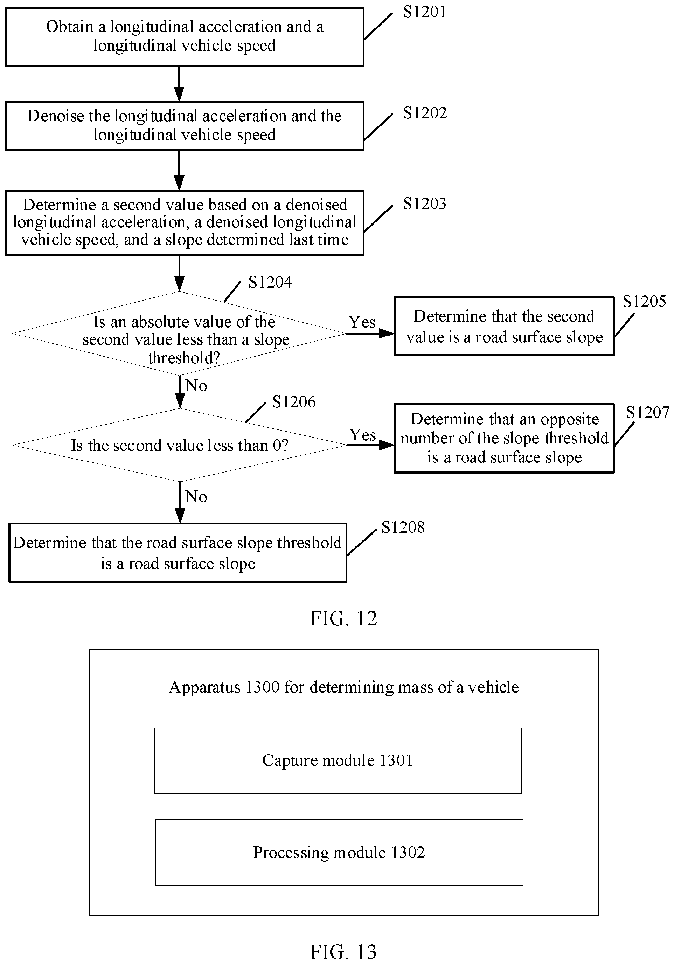

As shown in FIG. 12, the method includes the following steps.

S1201: Obtain a longitudinal acceleration and a longitudinal velocity.

The vehicle-mounted sensor module may measure the longitudinal acceleration a(*t*) and the longitudinal velocity u(*t*) of the vehicle, and determine a road surface slope.

S1202: Denoise the longitudinal acceleration and the longitudinal velocity.

The electronic device may denoise the longitudinal acceleration a(*t*) and the longitudinal velocity u(*t*) by using a denoising circuit. After the electronic device inputs a signal of the longitudinal acceleration a(*t*) to the denoising circuit, an output signal is a(*t*)', which is also a derivative of the longitudinal acceleration a(*t*) to time. After the electronic device inputs the longitudinal velocity u(*t*) to the denoising circuit, an output signal is $(\frac{du(t)}{dt})'$, which is also a derivative of a real value of the longitudinal acceleration to time. A dynamics model of the longitudinal acceleration sensor may be

configured as $(\sin\theta)' = (\frac{a(t)' - (\frac{du(t)}{dt})'}{g})$ .

S1203: Determine a second value based on a denoised longitudinal acceleration, a denoised longitudinal velocity, and a slope determined last time.

During specific implementation, the second value indicates an estimated value $\hat{\theta}(t)$, determined by the electronic device through prediction or estimation, of a road surface slope at the moment t.

The electronic device may estimate the road surface slope at the moment t by using the Kalman filter method, the denoised longitudinal acceleration a(t)', the denoised longitudinal velocity $(\frac{du(t)}{dt})'$ , and the slope $\sin\theta(t-1)'$ determined last time (the latest time).

Alternatively, the electronic device may predict the road surface slope at the moment t by using a trained neural network model, the denoised longitudinal acceleration a(t)', the denoised longitudinal velocity $(\frac{du(t)}{dt})'$ , and the slope $\sin\theta(t-1)'$ determined last time.

Alternatively, the electronic device may determine the road surface slope by using a recursive least square identification model including a forgetting factor, the denoised longitudinal acceleration a(*t*)', the denoised longitudinal velocity $(\frac{du(t)}{dt})'$ , and the slope $\sin\theta(t-1)'$ determined last time.

Specifically, a least square identification model, provided in this application, that includes a forgetting factor and that is used for determining a road surface slope is specifically shown below:

$$
\begin{cases}
\hat{\omega}_\theta(t) = \hat{\omega}_\theta(t-1) + K_\theta(t)[y_\theta(t) - x_\theta(t)\hat{\omega}_\theta(t-1)] \\
K_\theta(t) = \dfrac{P_\theta(t-1)x_\theta(t)}{\lambda_\theta + x_\theta(t)P_\theta(t-1)x_\theta(t)} \\
P_\theta(t) = \dfrac{[1 - K_\theta(t)x_\theta(t)]P_\theta(t-1)}{\lambda_\theta} \\
\hat{\theta}(t) = \arcsin\left[\int \hat{\omega}_\theta(t)dt\right]
\end{cases}
$$

$\hat{\omega}_\theta$ is an identification quantity, $x_\theta$ is an observed quantity, $y_\theta$ is an output quantity, $K_\theta$ is a gain vector, $P_\theta$ is a covariance, and $\lambda_\theta$ is the forgetting factor. $x_\theta$ is set to 1, the output quantity $y_\theta(t)$ is configured as $\frac{a(t)' - (\frac{du(t)}{dt})'}{g}$, $\hat{\omega}_\theta(t-1) = \sin\theta(t-1)'$ and the forgetting factor $\lambda_\theta$ is usually set to any value ranging from 0.9 to 1. In practice, the electronic device may continuously perform self-iteration by using the least square identification model including the forgetting factor. The electronic device may set the forgetting factor $\lambda_\theta$ to a fixed value, or may dynamically adjust the forgetting factor $\lambda_\theta$ based on other sampling data.

The electronic device may determine a road surface slope of a road on which the vehicle is located at the moment t based on the denoised longitudinal acceleration signal a(*t*)', the denoised longitudinal velocity $(\frac{du(t)}{dt})'$ , and an identification quantity obtained when a road surface slope is determined last time by using the least square identification model.

In the method for determining a road surface slope in this application, based on change trends of the longitudinal acceleration signal captured by the longitudinal acceleration sensor and the longitudinal velocity signal captured by the longitudinal velocity sensor, the denoising circuit denoises the captured longitudinal acceleration signal, and denoises the captured longitudinal velocity signal, to effectively suppress a sudden signal change and external interference. In addition, the road surface slope is determined by using the least square identification model including the forgetting factor. This improves robustness of the road surface slope and precision of identifying the road surface slope.

To avoid an exception of the determined road surface slope due to an exception of a sensor or the like, the electronic device further compares the determined road surface slope $\hat{\theta}(t)$ with a slope threshold. For ease of description, the road surface slope $\hat{\theta}(t)$ calculated by the electronic device is denoted as the second value, and the slope threshold is denoted as $\theta_{max}$. $\theta_{max}$ is usually determined based on a maximum road slope allowed in road design specifications. The electronic device may further perform the following steps when determining the road surface slope.

S1204: Determine whether an absolute value of the second value is less than the slope threshold. If the absolute value of the second value is less than the slope threshold, step S 1205 is performed next. If the absolute value of the second value is greater than or equal to the slope threshold, step S1206 is performed next.

The absolute value $|\hat{\theta}(t)|$ of the second value is compared with the maximum road surface slope $\theta_{max}$. If $|\hat{\theta}(t)|$ is less than $\theta_{max}$, it indicates that the electronic device estimates that the road surface slope at the moment t is normal. $\hat{\theta}(t)$ may be used to determine the mass of the vehicle at the moment t, or may be used in a process of determining a related parameter for controlling the vehicle. If $|\hat{\theta}(t)|$ is less than $\theta_{max}$, step S1205 is performed next. If $|\hat{\theta}(t)|$ is greater than or equal to $\theta_{max}$, it indicates that the electronic device estimates that the road surface slope at the moment t may be abnormal, to be specific, exceed a maximum road slope allowed in conventional road design specifications, and step S1206 is performed next.

S1205: Determine that the second value is the road surface slope.

S1206: Determine whether the second value is less than 0. If the second value is less than 0, step S1207 is performed next. If the second value is not less than 0, step S1208 is performed next.

If $|\hat{\theta}(t)|$ is greater than or equal to $\theta_{max}$, the maximum road slope $\theta_{max}$ is a finally returned value (a slope used to determine total mass of the vehicle) of the road slope, and a sign of the finally returned value is the same as that of the second value. If the second value is less than 0, that is, the sign of the second value is a negative sign, step S1207 is performed next. On the contrary, if the second value is greater than 0, that is, the sign of the second value is a positive sign, step S1208 is correspondingly performed.

S1207: Determine that an opposite number of the slope threshold is the road surface slope.

S120S: Determine that the road surface slope threshold is the road surface slope.

Compared with a conventional method for determining a road surface slope, in the method for determining a road surface slope in embodiments of this application, no other hardware structure needs to be added. The longitudinal acceleration and the longitudinal velocity are captured by conventional sensors, such as the longitudinal acceleration sensor and the longitudinal velocity sensor, of the vehicle respectively. Accuracy and precision of determining the road surface slope can be improved without increasing costs. In the method for determining a road surface slope in embodiments of this application, the road surface slope can be decoupled from the mass of the vehicle, so that the determining of the road surface slope is not affected by the mass of the vehicle or a turning condition. In addition, the method for determining a road surface slope in embodiments of this application is applicable to both a straight-forward condition and a turning condition.

In the method for determining mass of a vehicle in embodiments of this application, the mass of the vehicle, the road slope, and the turning resistance can be decoupled from each other, and precision and accuracy of determining the mass of the vehicle can be improved. The method for determining mass of a vehicle in embodiments of this application is applicable to both a turning condition and a straight-forward condition, and can adapt to a complex and variable driving conditions.

It should be noted that the method for determining mass of a vehicle and the method for determining a road surface slope in embodiments of this application may be separately implemented as independent solutions, or may be jointly implemented as one solution. This is not specifically limited in this application.

Based on a same concept, an embodiment of this application further provides an apparatus 1300 for determining mass of a vehicle, configured to implement the methods described in the embodiments shown in FIG. 4 to FIG. 12. A structure of the apparatus is shown in FIG. 13, and the apparatus includes a capture module 1301 and a processing module 1302.

The capture module 1301 is configured to obtain a parameter set of a vehicle at a first moment, where the parameter set includes a steering angle of each wheel of the vehicle, a lateral velocity, a yawing angular velocity, and a longitudinal force and a lateral force of each wheel, and the parameter set is used to determine turning resistance of the vehicle.

The processing module 1302 is configured to determine mass of the vehicle based on the parameter set and a longitudinal dynamics model, where the longitudinal dynamics model describes a longitudinal force balance of the vehicle, and a longitudinal force applied to the vehicle includes the turning resistance.

In an implementation, if the vehicle includes two steering wheels, the turning resistance and the parameter set meet the following formula:

$$F_r = \sum_{i=1}^{n} F_{xi}(1 - \cos\beta_i) + \sum_{i=1}^{n} F_{yi}\sin\beta_i - mvw_r,$$

where

$F_r$ is the turning resistance of the vehicle, $m$ is the mass of the vehicle, $\beta_i$ is a steering angle of an $i$th steering wheel of the vehicle, $n$ is a quantity of steering wheels of the vehicle, $F_{xi}$ is a longitudinal force of the $i$th steering wheel of the vehicle, $F_{yi}$ is a lateral force of the $i$th steering wheel of the vehicle, $v$ is a lateral velocity of the vehicle, and $w_r$ is a yawing angular velocity of the vehicle.

In an implementation, if the vehicle includes four steering wheels, the turning resistance and the parameter set meet the following formula:

$$F_r = \sum_{i=1}^{n} F_{xi}(1 - \cos\beta_i) + \sum_{i=1}^{2} F_{yi}\sin\delta_i - \sum_{i=3}^{4} F_{yi}\sin\beta_i - mvw_r,$$

where

$F_r$ is the turning resistance of the vehicle, $m$ is the mass of the vehicle, $\beta_i$ is a steering angle of an $i^{th}$ steering wheel of the vehicle, $n$ is a quantity of steering wheels of the vehicle, $F_{xi}$ is a longitudinal force of the $i^{th}$ steering wheel of the vehicle, $F_{yi}$ is a lateral force of the $i^{th}$ steering wheel of the vehicle, $v$ is a lateral velocity of the vehicle, and $w_r$ is a yawing angular velocity of the vehicle, where an included angle between a direction of the longitudinal velocity and a direction of each of $F_{y1}$ and $F_{y2}$ is greater than 90°, and an included angle between the direction of the longitudinal velocity and a direction of each of $F_{y3}$ and $F_{y4}$ is less than 90°.

In an implementation, the processing module 1302 is further configured to: after the mass of the vehicle is determined based on the parameter set and the longitudinal dynamics model, determine mass of the vehicle at a second moment based on the mass, where the second moment is later than the first moment.

In an implementation, the processing module 1302 may be specifically configured to: obtain a first parameter set and a second parameter set of the vehicle at the second moment, where the first parameter set includes a road surface slope, a longitudinal velocity, a lateral velocity, and a yawing angular velocity, and the second parameter set includes a steering angle of each wheel of the vehicle, a lateral velocity, a yawing angular velocity, a longitudinal force and a lateral force of each wheel, a driving force, and air resistance; determine a first input value, where the first input value is determined based on a preset rolling friction parameter, a preset rotating mass conversion factor, and the first parameter set; determine a second input value, where the second input value is determined based on the second parameter set; determine a first value based on the first input value, the second input value, and the mass of the vehicle at the first moment, where the first value is an estimated value of the mass of the vehicle at the second moment; and determine the mass of the vehicle at the second moment based on the first value, a first mass threshold, and a second mass threshold.

In an implementation, the processing module 1302 may be specifically configured to: if the first value is less than or equal to the first mass threshold, determine that the first mass threshold is the mass of the vehicle at the second moment; or if the first value is greater than or equal to the second mass threshold, determine that the second mass threshold is the mass of the vehicle at the second moment; or if the first value is greater than the first mass threshold and the first value is less than the second mass threshold, determine that the first value is the mass of the vehicle at the second moment.

In an implementation, the longitudinal force applied to the vehicle further includes slope resistance of the vehicle, and the processing module 1302 may be further configured to determine a slope of a road surface on which the vehicle is located at the first moment, where the slope is used to determine the slope resistance; and

when determining the first mass of the vehicle based on the parameter set and the longitudinal dynamics model, the processing module 1302 is specifically configured to determine the mass of the vehicle based on the parameter set, the slope, and the longitudinal dynamics model.

In an implementation, the processing module 1302 may be specifically configured to: obtain a longitudinal acceleration signal and a longitudinal velocity signal of the vehicle at the first moment; denoise the longitudinal acceleration signal and the longitudinal velocity signal; determine a second value based on a denoised longitudinal acceleration signal, a denoised longitudinal velocity signal, and a slope determined last time; and determine, based on the second value and a slope threshold, the slope of the road surface on which the vehicle is located at the first moment.

In an implementation, the processing module 1302 may be specifically configured to: if an absolute value of the second value is less than the slope threshold, determine that the second value is the slope of the road surface on which the vehicle is located at the first moment; or if an absolute value of the second value is greater than or equal to the slope threshold and the second value is less than 0, determine that an opposite number of the slope threshold is the slope of the road surface on which the vehicle is located at the first moment; or if an absolute value of the second value is greater than or equal to the slope threshold and the second value is greater than 0, determine that the slope threshold is the slope of the road surface on which the vehicle is located at the first moment.

Division into the modules in this embodiment of this application is an example and is merely logical function division, and may be other division in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

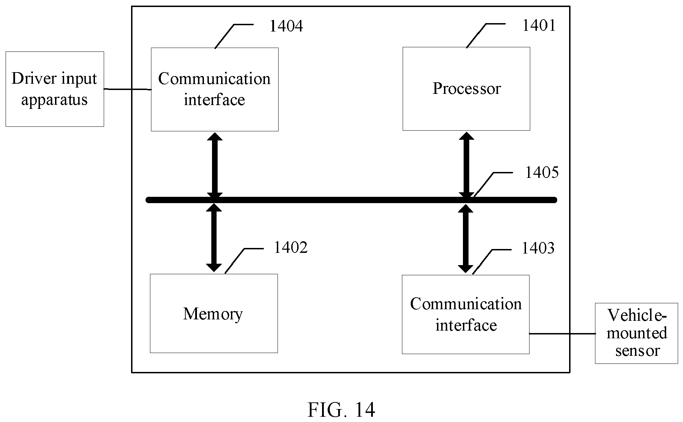

When the integrated module is implemented in a form of hardware, as shown in FIG. 14, a vehicle control apparatus may include a processor 1401. Physical hardware corresponding to the module may be the processor 1401. The processor 1401 may be a central processing module (central processing unit, CPU), a digital processing module, or the like. The apparatus further includes a memory 1402, configured to store a program executed by the processor 1401. The memory 1402 may be a nonvolatile memory such as a hard disk drive (hard disk drive, HDD) or a solid-state drive (solid-state drive, SSD), or may be a volatile memory (volatile memory) such as a random access memory (random access memory, RAM). The memory 1402 is any other medium that can be used to carry or store expected program code in a form of instructions or data structures and that can be accessed by a computer, but is not limited thereto. The apparatus may further include a communication interface 1403 and a communication interface 1404. The processor 1401 may obtain, through the communication interface 1403, parameters such as an actual yawing angular velocity, a longitudinal velocity, a longitudinal acceleration, and a lateral acceleration that are captured by a vehicle-mounted sensor, and obtain parameters such as a turning angle of a steering wheel from a driver input apparatus through the communication interface 1404.

In an implementation, the processor 1401 is configured to execute the program code stored in the memory 1402, and is specifically configured to perform the methods described in the embodiments shown in FIG. 4 to FIG. 12. Refer to the methods in the embodiments shown in FIG. 4 to FIG. 12. Details are not described herein again in this application. In this implementation, the processor 1401 may execute the program code stored in the memory 1402 to implement the functions of the apparatus 1300 for determining mass of a vehicle in FIG. 13.

In another implementation, the processor 1401 is configured to execute the program code stored in the memory 1402, and may be configured to perform the method described in step S401 and step S402 in FIG. 4. Refer to the method in the embodiment shown in FIG. 4. Details are not described herein again in this application. In this implementation, the processor 1401 may execute the program code stored in the memory 1402 to implement the functions of the vehicle system shown in FIG. 2 and FIG. 3, or implement the functions of the apparatus for determining mass of a vehicle in FIG. 13.

In this embodiment of this application, a specific connection medium between the processor 1401, the memory 1402, the communication interface 1403, and the communication interface 1404 is not limited. In this embodiment of this application, in FIG. 14, the processor 1401, the memory 1402, the communication interface 1403, and the communication interface 1404 are connected through a bus 1405. The bus is represented by a bold line in FIG. 14. A connection manner between other components is described merely as an example and does not constitute a limitation. The bus may be categorized as an address bus, a data bus, a control bus, or the like. For ease of representation, only one bold line is used to represent the bus in FIG. 14, but this does not mean that there is only one bus or only one type of bus.

An embodiment of this application further provides a computer-readable storage medium, configured to store computer software instructions that need to be executed by the processor, and the computer software instructions include a program that needs to be executed by the processor.

A person skilled in the art should understand that embodiments of this application may be provided as a method, a system, or a computer program product. Therefore, this application may be implemented in a form of a hardware-only embodiment, a software-only embodiment, or an embodiment with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Clearly, a person skilled in the art can make various modifications and variations to this application without departing from the spirit and scope of this application. This application is intended to cover these modifications and variations of this application provided that they fall within the scope of the claims of this application and equivalent technologies thereof.

**Claims**

1. A method for determining mass of a vehicle, wherein the method comprises:

    obtaining a parameter set of a vehicle at a first moment, wherein the parameter set comprises a steering angle of each wheel of the vehicle, a lateral velocity, a yawing angular velocity, and a longitudinal force and a lateral force of each wheel, and the parameter set is used to determine turning resistance of the vehicle; and determining mass of the vehicle based on the parameter set and a longitudinal dynamics model, wherein the longitudinal dynamics model describes a longitudinal force balance of the vehicle, and a longitudinal force applied to the vehicle comprises the turning resistance.

2. The method according to claim 1, wherein if the vehicle comprises two steering wheels, the turning resistance and the parameter set meet the following formula:

$$F_r = \sum_{i=1}^{n} F_{xi}(1 - \cos\beta_i) + \sum_{i=1}^{n} F_{yi}\sin\beta_i - mvw_r,$$

    wherein
    $F_r$ is the turning resistance of the vehicle, $m$ is the mass of the vehicle, $\beta_i$ is a steering angle of an $i^{th}$ steering wheel of the vehicle, $n$ is a quantity of steering wheels of the vehicle, $F_{xi}$ is a longitudinal force of the $i^{th}$ steering wheel of the vehicle, $F_{yi}$ is a lateral force of the $i^{th}$ steering wheel of the vehicle, $v$ is a lateral velocity of the vehicle, and $w_r$ is a yawing angular velocity of the vehicle.

3. The method according to claim 1, wherein if the vehicle comprises four steering wheels, the turning resistance and the parameter set meet the following formula:

$$F_r = \sum_{i=1}^{n} F_{xi}(1 - \cos\beta_i) + \sum_{i=1}^{2} F_{yi}\sin\delta_i - \sum_{i=3}^{4} F_{yi}\sin\beta_i - mvw_r$$

    , wherein
    $F_r$ is the turning resistance of the vehicle, $m$ is the mass of the vehicle, $\beta_i$ is a steering angle of an $i^{th}$ steering wheel of the vehicle, $n$ is a quantity of steering wheels of the vehicle, $F_{xi}$ is a longitudinal force of the $i^{th}$ steering wheel of the vehicle, $F_{yi}$ is a lateral force of the $i^{th}$ steering wheel of the vehicle, $v$ is a lateral velocity of the vehicle, and $w_r$ is a yawing angular velocity of the vehicle, wherein an included angle between a direction of the longitudinal velocity and a direction of each of $F_{y1}$ and $F_{y2}$ is greater than 90°, and an included angle between the direction of the longitudinal velocity and a direction of each of $F_{y3}$ and $F_{y4}$ is less than 90°.

4. The method according to any one of claims 1 to 3, wherein after the determining mass of the vehicle based on the parameter set and a longitudinal dynamics model, the method further comprises:
determining mass of the vehicle at a second moment based on the mass, wherein the second moment is later than the first moment.

5. The method according to claim 4, wherein the determining mass of the vehicle at a second moment based on the mass comprises:

    obtaining a first parameter set and a second parameter set of the vehicle at the second moment, wherein the first parameter set comprises a road surface slope, a longitudinal velocity, a lateral velocity, and a yawing angular velocity, and the second parameter set comprises a steering angle of each wheel of the vehicle, a lateral velocity, a yawing angular velocity, a longitudinal force and a lateral force of each wheel, a driving force, and air resistance;
    determining a first input value, wherein the first input value is determined based on a preset rolling friction parameter, a preset rotating mass conversion factor, and the first parameter set;
    determining a second input value, wherein the second input value is determined based on the second parameter set;
    determining a first value based on the first input value, the second input value, and the mass of the vehicle at the first moment, wherein the first value is an estimated value of the mass of the vehicle at the second moment; and determining the mass of the vehicle at the second moment based on the first value, a first mass threshold, and a second mass threshold.

6. The method according to claim 5, wherein the determining the mass of the vehicle at the second moment based on the first value comprises:

if the first value is less than or equal to the first mass threshold, determining that the first mass threshold is the mass of the vehicle at the second moment; or

if the first value is greater than or equal to the second mass threshold, determining that the second mass threshold is the mass of the vehicle at the second moment; or

if the first value is greater than the first mass threshold and the first value is less than the second mass threshold, determining that the first value is the mass of the vehicle at the second moment.

7. The method according to any one of claims 1 to 6, wherein the longitudinal force applied to the vehicle further comprises slope resistance of the vehicle;
the method further comprises:

determining a slope of a road surface on which the vehicle is located at the first moment, wherein the slope is used to determine the slope resistance; and

the determining mass of the vehicle based on the parameter set and a longitudinal dynamics model comprises:
determining the mass of the vehicle based on the parameter set, the slope, and the longitudinal dynamics model.

8. The method according to claim 7, wherein the determining a slope of a road surface on which the vehicle is located at the first moment comprises:

obtaining a longitudinal acceleration signal and a longitudinal velocity signal of the vehicle at the first moment;

denoising the longitudinal acceleration signal and the longitudinal velocity signal;

determining a second value based on a denoised longitudinal acceleration signal, a denoised longitudinal velocity signal, and a slope determined last time, wherein the second value is an estimated value of the road surface slope at the first moment; and

determining, based on the second value and a slope threshold, the slope of the road surface on which the vehicle is located at the first moment.

9. The method according to claim 8, wherein the determining, based on the second value, the slope of the road surface on which the vehicle is located at the first moment comprises:

if an absolute value of the second value is less than the slope threshold, determining that the second value is the slope of the road surface on which the vehicle is located at the first moment; or

if an absolute value of the second value is greater than or equal to the slope threshold and the second value is less than 0, determining that an opposite number of the slope threshold is the slope of the road surface on which the vehicle is located at the first moment; or

if an absolute value of the second value is greater than or equal to the slope threshold and the second value is greater than 0, determining that the slope threshold is the slope of the road surface on which the vehicle is located at the first moment.

10. An apparatus for determining mass of a vehicle, wherein the apparatus comprises:

a capture module, configured to obtain a parameter set of a vehicle at a first moment, wherein the parameter set comprises a steering angle of each wheel of the vehicle, a lateral velocity, a yawing angular velocity, and a longitudinal force and a lateral force of each wheel, and the parameter set is used to determine turning resistance of the vehicle; and

a processing module, configured to determine mass of the vehicle based on the parameter set and a longitudinal dynamics model, wherein the longitudinal dynamics model describes a longitudinal force balance of the vehicle, and a longitudinal force applied to the vehicle comprises the turning resistance.

11. The apparatus according to claim 10, wherein if the vehicle comprises two steering wheels, the turning resistance and the parameter set meet the following formula:

$$F_r = \sum_{i=1}^{n} F_{xi}(1 - \cos\beta_i) + \sum_{i=1}^{n} F_{yi}\sin\beta_i - mvw_r,$$

wherein
$F_r$ is the turning resistance of the vehicle, m is the mass of the vehicle, $\beta_i$ is a steering angle of an $i^{th}$ steering wheel of the vehicle, n is a quantity of steering wheels of the vehicle, $F_{xi}$ is a longitudinal force of the $i^{th}$ steering wheel of the vehicle, $F_{yi}$ is a lateral force of the $i^{th}$ steering wheel of the vehicle, $v$ is a lateral velocity of the vehicle, and $w_r$ is a yawing angular velocity of the vehicle.

12. The apparatus according to claim 10, wherein if the vehicle comprises four steering wheels, the turning resistance and the parameter set meet the following formula:

$$F_r = \sum_{i=1}^{n} F_{xi}(1 - \cos\beta_i) + \sum_{i=1}^{2} F_{yi}\sin\delta_i - \sum_{i=3}^{4} F_{yi}\sin\beta_i - mvw_r$$

, wherein
$F_r$ is the turning resistance of the vehicle, m is the mass of the vehicle, $\beta_i$ is a steering angle of an $i^{th}$ steering wheel of the vehicle, n is a quantity of steering wheels of the vehicle, $F_{xi}$ is a longitudinal force of the $i^{th}$ steering wheel of the vehicle, $F_{yi}$ is a lateral force of the $i^{th}$ steering wheel of the vehicle, $v$ is a lateral velocity of the vehicle, and $w_r$ is a yawing angular velocity of the vehicle, wherein an included angle between a direction of the longitudinal velocity and a direction of each of $F_{y1}$ and $F_{y2}$ is greater than 90°, and an included angle between the direction of the longitudinal velocity and a direction of each of $F_{y3}$ and $F_{y4}$ is less than 90°.

13. The apparatus according to any one of claims 10 to 12, wherein the processing module is further configured to:
after the mass of the vehicle is determined based on the parameter set and the longitudinal dynamics model, determine mass of the vehicle at a second moment based on the mass, wherein the second moment is later than the first moment.

14. The apparatus according to claim 13, wherein the processing module is specifically configured to:

obtain a first parameter set and a second parameter set of the vehicle at the second moment, wherein the first parameter set comprises a road surface slope, a longitudinal velocity, a lateral velocity, and a yawing angular velocity, and the second parameter set comprises a steering angle of each wheel of the vehicle, a lateral velocity, a yawing angular velocity, a longitudinal force and a lateral force of each wheel, a driving force, and air resistance;
determine a first input value, wherein the first input value is determined based on a preset rolling friction parameter, a preset rotating mass conversion factor, and the first parameter set;
determine a second input value, wherein the second input value is determined based on the second parameter set;
determine a first value based on the first input value, the second input value, and the mass of the vehicle at the first moment, wherein the first value is an estimated value of the mass of the vehicle at the second moment; and
determine the mass of the vehicle at the second moment based on the first value, a first mass threshold, and a second mass threshold.

15. The apparatus according to claim 14, wherein the processing module is specifically configured to:

if the first value is less than or equal to the first mass threshold, determine that the first mass threshold is the mass of the vehicle at the second moment; or
if the first value is greater than or equal to the second mass threshold, determine that the second mass threshold is the mass of the vehicle at the second moment; or
if the first value is greater than the first mass threshold and the first value is less than the second mass threshold, determine that the first value is the mass of the vehicle at the second moment.

16. The apparatus according to any one of claims 10 to 15, wherein the longitudinal force applied to the vehicle further comprises slope resistance of the vehicle;

the processing module is further configured to determine a slope of a road surface on which the vehicle is located at the first moment, wherein the slope is used to determine the slope resistance; and
when determining the mass of the vehicle based on the parameter set and the longitudinal dynamics model, the processing module is specifically configured to determine the mass of the vehicle based on the parameter set, the slope, and the longitudinal dynamics model.

17. The apparatus according to claim 16, wherein the processing module is specifically configured to:

obtain a longitudinal acceleration signal and a longitudinal velocity signal of the vehicle at the first moment;
denoise the longitudinal acceleration signal and the longitudinal velocity signal;
determine a second value based on a denoised longitudinal acceleration signal, a denoised longitudinal velocity signal, and a slope determined last time, wherein the second value is an estimated value of the road surface slope at the first moment; and
determine, based on the second value and a slope threshold, the slope of the road surface on which the vehicle is located at the first moment.

18. The apparatus according to claim 17, wherein the processing module is specifically configured to:

if an absolute value of the second value is less than the slope threshold, determine that the second value is the slope of the road surface on which the vehicle is located at the first moment; or
if an absolute value of the second value is greater than or equal to the slope threshold and the second value is less than 0, determine that an opposite number of the slope threshold is the slope of the road surface on which the vehicle is located at the first moment; or
if an absolute value of the second value is greater than or equal to the slope threshold and the second value is greater than 0, determine that the slope threshold is the slope of the road surface on which the vehicle is located at the first moment.

19. An electronic device, comprising a processor and a memory, wherein the memory is configured to store computer program instructions, and when the processor executes the computer program instructions, the electronic device is enabled to perform the method for determining mass of a vehicle according to any one of claims 1 to 9.

20. A computer-readable storage medium, wherein the computer-readable storage medium comprises computer instructions, and when the computer instructions run on a computer, the computer is enabled to perform the method for determining mass of a vehicle according to any one of claims 1 to 9.

21. A chip, comprising a processor, wherein when the processor executes instructions, the processor performs the method for determining mass of a vehicle according to any one of claims 1 to 9.

Lateral direction

Longitudinal direction

$F_{x3}$

$F_{x1}$

$F_w$ $F_i$ $F_j$ $F_f$

$F_{x4}$

$F_{x2}$

FIG. 1

| Signal capture module | | On-board electronic control system | | Actuation apparatus |
|---|---|---|---|---|
| **Longitudinal vehicle speed sensor** | Longitudinal vehicle speed → | **Information processing module** | Turning angle of a steering wheel → | **Steering wheel** |
| **Longitudinal acceleration sensor** | Longitudinal acceleration → | | Total mass of a vehicle → **Decision control module** → Driving torque → | **Motor/Engine** |
| **Vehicle status sensor** | Other vehicle status parameters → | | Road surface slope → | **Brake** |
| **...** | Vehicle parameters → | | Other signals → Braking force → Other instructions → | **...** |

FIG. 2

EP 4 249 340 A1

```
┌─────────────────────────┐              ┌─────────────────────────┐
│ Vehicle-mounted sensor  │              │          ADAS           │
│  ┌────────────────────┐ │              │                         │
│  │    Longitudinal    │ │              └────────────┬────────────┘
│  │    acceleration    │ │                           │
│  └────────────────────┘ │                           │
│  ┌────────────────────┐ │                           ▼
│  │ Lateral acceleration│ │      ┌─────────────────────────┐   Wheel   ┌─────────────────────────┐
│  └────────────────────┘ │      │                         │   torque  │  Torque actuation unit  │
│  ┌────────────────────┐ │──────▶│   Vehicle controller    │──────────▶│  ┌───────────────────┐  │
│  │Yawing angular velocity│ │     │                         │          │  │ Motor control unit│  │
│  └────────────────────┘ │      └─────────────────────────┘          │  └───────────────────┘  │
│  ┌────────────────────┐ │                                           │  ┌───────────────────┐  │
│  │   Wheel velocity   │ │                                           │  │Hydraulic control unit│ │
│  └────────────────────┘ │                                           │  └───────────────────┘  │
└─────────────────────────┘                                           └─────────────────────────┘

┌─────────────────────────┐
│  Driver input apparatus │
│  ┌────────────────────┐ │
│  │   Turning angle of a│ │
│  │    steering wheel   │ │
│  └────────────────────┘ │
│  ┌────────────────────┐ │
│  │Pedal opening degree │ │
│  └────────────────────┘ │
│  ┌────────────────────┐ │
│  │        Gear        │ │
│  └────────────────────┘ │
└─────────────────────────┘
```

FIG. 3

Obtain a parameter set of a vehicle at a first moment, where the parameter set includes a steering angle of each wheel of the vehicle, a lateral velocity, a yawing angular velocity, and a longitudinal force and a lateral force of each wheel, and the parameter set is used to determine turning resistance of the vehicle

S401

Determine mass of the vehicle based on a longitudinal dynamics model, where the longitudinal dynamics model describes a longitudinal force balance of the vehicle, and a longitudinal force applied to the vehicle includes the turning resistance

S402

FIG. 4

$F_{y3}$

$F_{x3}$

$F_{y1}$

Lateral direction

$F_{x1}$

Longitudinal direction

$\beta_1$

$F_w$    $F_i$    $F_j$    $F_f$

$F_{y4}$

$\omega_r$

$F_{y2}$

$F_{x4}$

$F_{x2}$

$\beta_2$

FIG. 5

FIG. 6

FIG. 7

FIG. 8

FIG. 9

FIG. 10

Obtain a first parameter set and a second parameter set of a vehicle at a second moment, where the first parameter set includes a road surface slope, a longitudinal velocity, a lateral velocity, and a yawing angular velocity, and the second parameter set includes a steering angle of each wheel of the vehicle, a lateral velocity, a yawing angular velocity, a longitudinal force and a lateral force of each wheel, a driving force, and air resistance

S1101

Determine a first input value, where the first input value is determined based on a preset rolling friction parameter, a preset rotating mass conversion factor, and the first parameter set

S1102

Determine a second input value, where the second input value is determined based on the second parameter set

S1103

Determine a first value based on the first input value, the second input value, and mass of the vehicle at a first moment, where the first value is an estimated value of mass of the vehicle at the second moment

S1104

Determine the mass of the vehicle at the second moment based on the first value, a first mass threshold, and a second mass threshold

S1105

FIG. 11

Obtain a longitudinal acceleration and a longitudinal vehicle speed — S1201

↓

Denoise the longitudinal acceleration and the longitudinal vehicle speed — S1202

↓

Determine a second value based on a denoised longitudinal acceleration, a denoised longitudinal vehicle speed, and a slope determined last time — S1203

↓

S1204 — Is an absolute value of the second value less than a slope threshold? —Yes→ Determine that the second value is a road surface slope — S1205

↓ No

S1206 — Is the second value less than 0? —Yes→ Determine that an opposite number of the slope threshold is a road surface slope — S1207

↓ No

Determine that the road surface slope threshold is a road surface slope — S1208

**FIG. 12**

Apparatus 1300 for determining mass of a vehicle

Capture module 1301

Processing module 1302

**FIG. 13**

FIG. 14

## INTERNATIONAL SEARCH REPORT

| International application No. |
| --- |
| **PCT/CN2021/130425** |

### A. CLASSIFICATION OF SUBJECT MATTER

B60W 40/13(2012.01)i; B60W 40/076(2012.01)i; B60W 40/107(2012.01)i; B60W 50/00(2006.01)i

According to International Patent Classification (IPC) or to both national classification and IPC

### B. FIELDS SEARCHED

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 华为技术有限公司, 质量, 重量, 坡度, 转弯, 转向, 拐弯, 弯道, 阻力, 卡尔曼, 最小二乘, 加速度, mass, gradient, turn, steer, force, kalman, least square, acceleration

### C. DOCUMENTS CONSIDERED TO BE RELEVANT

| Category* | Citation of document, with indication, where appropriate, of the relevant passages | Relevant to claim No. |
| --- | --- | --- |
| X | US 2013190945 A1 (ADVICS CO., LTD.) 25 July 2013 (2013-07-25)<br>description paragraphs [0020]-[0023], [0055]-[0061], figures 1, 7, 8 | 1-3, 7, 10-12, 16, 19-21 |
| Y | US 2013190945 A1 (ADVICS CO., LTD.) 25 July 2013 (2013-07-25)<br>description paragraphs [0020]-[0023], [0055]-[0061], figures 1, 7, 8 | 4-9, 13-21 |
| Y | CN 110727994 A (JILIN UNIVERSITY) 24 January 2020 (2020-01-24)<br>description paragraphs [0149]-[0170] | 4-9, 13-21 |
| Y | CN 104897135 A (SAIC GENERAL MOTORS CORPORATION LIMITED et al.) 09 September 2015 (2015-09-09)<br>description, paragraphs [0022]-[0038], figures 1, 2 | 8, 9, 17-21 |
| X | CN 103308131 A (LS INDUSTRY SYSTEMS CO., LTD.) 18 September 2013 (2013-09-18)<br>description, paragraphs [0040]-[0138], and figures 1-5 | 1-3, 7, 10-12, 16, 19-21 |
| A | CN 111507019 A (BEIJING INSTITUTE OF TECHNOLOGY) 07 August 2020 (2020-08-07)<br>entire document | 1-21 |
| A | CN 107247824 A (CHONGQING UNIVERSITY) 13 October 2017 (2017-10-13)<br>entire document | 1-21 |

☐ Further documents are listed in the continuation of Box C.　　☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 December 2021** | **28 January 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/130425**

| Patent document cited in search report | | | Publication date (day/month/year) | Patent family member(s) | | | Publication date (day/month/year) |
|---|---|---|---|---|---|---|---|
| US | 2013190945 | A1 | 25 July 2013 | JP | 2013152170 | A | 08 August 2013 |
| | | | | JP | 5668701 | B2 | 12 February 2015 |
| CN | 110727994 | A | 24 January 2020 | None | | | |
| CN | 104897135 | A | 09 September 2015 | None | | | |
| CN | 103308131 | A | 18 September 2013 | CN | 103308131 | B | 27 May 2015 |
| | | | | KR | 20130103935 | A | 25 September 2013 |
| | | | | KR | 101805929 | B1 | 06 December 2017 |
| | | | | US | 2013238298 | A1 | 12 September 2013 |
| | | | | US | 9471724 | B2 | 18 October 2016 |
| CN | 111507019 | A | 07 August 2020 | WO | 2021223334 | A1 | 11 November 2021 |
| CN | 107247824 | A | 13 October 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011553155X